# EUROPEAN PATENT APPLICATION

(11) **EP 2 112 183 A1**
(43) Date of publication of application: **28.10.2009**
(21) Application number: 08711025.0
(22) Date of filing: 08.02.2008
(51) Int. Cl.: C08F 290/12, C08F 8/30

(54) **CURABLE RESIN COMPOSITION AND METHOD FOR PRODUCING THE SAME**

(30) Priority: 15.02.2007 JP 2007035477
(71) Applicant: Daikin Industries, Ltd., Osaka 530-8323 (JP)
(72) Inventor: TANAKA, Yoshito, Settsu-shi Osaka 5668585 (JP); ANDO, Yoshito, Settsu-shi Osaka 5668585 (JP)
(74) Representative: HOFFMANN EITLE
(86) International application number: PCT/JP2008/052146
(87) International publication number: WO 2008/099782

(57) **Abstract**

There is provided a curable resin composition moldable even without containing an organic solvent and a process for preparation thereof. The curable resin composition is a curable resin composition comprising (A) a reaction product of a fluorine-containing polymer (A-1) having hydroxyl group and comprising a radically polymerizable unsaturated monomer unit having fluorine atom and hydroxyl group and an isocyanate group-containing unsaturated compound (A-2) having one isocyanate group and at least one radically polymerizable unsaturated group, and the reaction product is dissolved in (B) an acrylic monomer.

## Description

### TECHNICAL FIELD

The present invention relates to a curable resin composition comprising a reaction product of a fluorine-containing copolymer having hydroxyl group and an isocyanate group-containing unsaturated compound and an acrylic monomer, and to a preparation process thereof.

### BACKGROUND ART

So far a composition of a curable fluorine-containing polymer having ethylenic carbon-carbon double bond at its end has been proposed as a curable resin composition comprising a fluorine-containing polymer (cf. WO 02/18457). Also, there is known a curable resin composition which is prepared by dispersing, in a solvent, a graft copolymer obtained by solution polymerization of an isocyanate group-containing acrylic monomer in a xylene solvent containing a reaction product of a fluorine-containing copolymer having hydroxyl group and the isocyanate group-containing acrylic monomer and is used as a coating composition (cf. JP62-25104A).

### DISCLOSURE OF INVENTION

It is an object of the present invention to provide a curable resin composition being moldable even without containing an organic solvent, and a preparation process thereof.

The present invention relates to a curable resin composition, comprising (A) a reaction product of a fluorine-containing polymer (A-1) having hydroxyl group and comprising a radically polymerizable unsaturated monomer unit having fluorine atom and hydroxyl group and an isocyanate group-containing unsaturated compound (A-2) having one isocyanate group and at least one radically polymerizable unsaturated group, and the reaction product is dissolved in (B) an acrylic monomer.

It is preferable that a viscosity of the curable resin composition at 30°C is 5 to 100,000 mPa·s. It is preferable that the fluorine-containing polymer (A-1) having hydroxyl group has a structural unit represented by the formula (I). 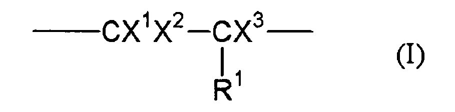 wherein X¹ and X² may be the same or different and each is fluorine atom or hydrogen atom; X³ is fluorine atom, hydrogen atom, chlorine atom, methyl group or trifluoromethyl group; R¹ is a chain or branched alkyl group, fluoroalkyl group or perfluoroalkyl group having 1 to 30 carbon atoms and at least one hydroxyl group and may have an ether bond, ester bond or urethane bond in its chain, and at least one fluorine atom is contained in any of X¹ to X³ and R¹.

It is preferable that the fluorine-containing polymer (A-1) having hydroxyl group has a structural unit represented by the formula (II). 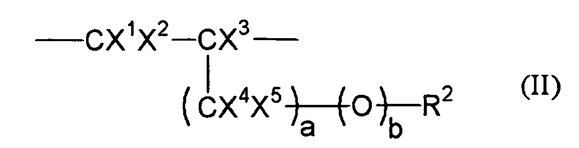 wherein X¹ and X² may be the same or different and each is fluorine atom or hydrogen atom; X³ is fluorine atom, hydrogen atom, chlorine atom, methyl group or trifluoromethyl group; X⁴ and X⁵ may be the same or different and each is hydrogen atom, fluorine atom, methyl group or trifluoromethyl group; a is 0 or an integer of 1 to 3; b is 0 or 1; R² is a chain or branched alkyl group, fluoroalkyl group or perfluoroalkyl group having 1 to 29 carbon atoms and at least one hydroxyl group and may have an ether bond, ester bond or urethane bond in its chain, and at least one fluorine atom is contained in any of X¹ to X⁵ and R².

It is preferable that the fluorine-containing polymer (A-1) having hydroxyl group has a structural unit represented by the formula (III). 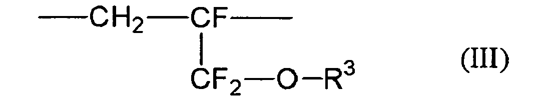 wherein R³ is a chain or branched alkyl group, fluoroalkyl group or perfluoroalkyl group having 1 to 29 carbon atoms and at least one hydroxyl group and may have an ether bond, ester bond or urethane bond in its chain.

It is preferable that the acrylic monomer (B) is an acrylic monomer having one or more radically reactive group.

It is preferable that the radically polymerizable unsaturated group in the isocyanate group-containing unsaturated compound (A-2) is a methacryl group, an acryl group, a 2-fluoroacryl group, a 2-chloroacryl group or two or more thereof.

The present invention further relates to a process for preparing a curable resin composition comprising a step of dissolving, in an acrylic monomer (B), a fluorine-containing polymer (A-1) having hydroxyl group and comprising a radically polymerizable unsaturated monomer unit having fluorine atom and hydroxyl group and an isocyanate group-containing unsaturated compound (A-2) having one isocyanate group and at least one radically polymerizable unsaturated group, and a step of allowing the fluorine-containing polymer (A-1) having hydroxyl group to react with the isocyanate group-containing unsaturated compound (A-2) in the acrylic monomer (B).

It is preferable to dissolve the fluorine-containing polymer (A-1) having hydroxyl group in the acrylic monomer (B) and then add and dissolve the isocyanate group-containing unsaturated compound (A-2).

It is preferable that a ratio of the number of isocyanate groups in the isocyanate group-containing unsaturated compound (A-2) to the number of all hydroxyl groups in the fluorine-containing polymer (A-1) having hydroxyl group and the acrylic monomer (B) is 0.01:1 to 1:1.

It is preferable that the fluorine-containing polymer (A-1) having hydroxyl group has a structural unit represented by the formula (I). 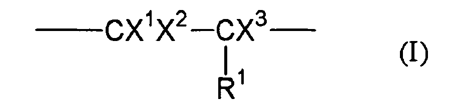 wherein X¹ and X² may be the same or different and each is fluorine atom or hydrogen atom; X³ is fluorine atom, hydrogen atom, chlorine atom, methyl group or trifluoromethyl group; R¹ is a chain or branched alkyl group, fluoroalkyl group or perfluoroalkyl group having 1 to 30 carbon atoms and at least one hydroxyl group and may have an ether bond, ester bond or urethane bond in its chain, and at least one fluorine atom is contained in any of X¹ to X³ and R¹.

It is preferable that the fluorine-containing polymer (A-1) having hydroxyl group has a structural unit represented by the formula (II). 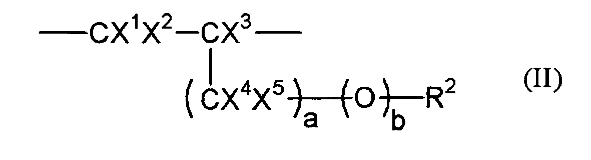 wherein X¹ and X² may be the same or different and each is fluorine atom or hydrogen atom; X³ is fluorine atom, hydrogen atom, chlorine atom, methyl group or trifluoromethyl group; X⁴ and X⁵ may be the same or different and each is hydrogen atom, fluorine atom, methyl group or trifluoromethyl group; a is 0 or an integer of 1 to 3; b is 0 or 1; R² is a chain or branched alkyl group, fluoroalkyl group or perfluoroalkyl group having 1 to 29 carbon atoms and at least one hydroxyl group and may have an ether bond, ester bond or urethane bond in its chain, and at least one fluorine atom is contained in any of X¹ to X⁵ and R².

It is preferable that the fluorine-containing polymer (A-1) having hydroxyl group has a structural unit represented by the formula (III). 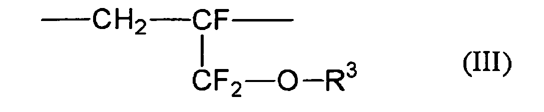 wherein R³ is a chain or branched alkyl group, fluoroalkyl group or perfluoroalkyl group having 1 to 29 carbon atoms and at least one hydroxyl group and may have an ether bond, ester bond or urethane bond in its chain.

### BEST MODE FOR CARRYING OUT THE INVENTION

The curable resin composition of the present invention comprises (A) the reaction product of the fluorine-containing polymer (A-1) having hydroxyl group and comprising a radically polymerizable unsaturated monomer unit having fluorine atom and hydroxyl group and the isocyanate group-containing unsaturated compound (A-2) having one isocyanate group and at least one radically polymerizable unsaturated group and (B) the acrylic monomer.

Examples of the radically polymerizable unsaturated monomer unit having hydroxyl group in the fluorine-containing copolymer (A-1) having hydroxyl group are fluorine-containing ethylenic monomers having hydroxyl group and represented by the formula (I). 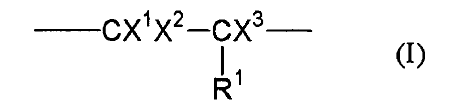 wherein X¹ and X² may be the same or different and each is fluorine atom or hydrogen atom; X³ is fluorine atom, hydrogen atom, chlorine atom, methyl group or trifluoromethyl group; R¹ is a chain or branched alkyl group, fluoroalkyl group or perfluoroalkyl group having 1 to 30 carbon atoms and at least one hydroxyl group and may have an ether bond, ester bond or urethane bond in its chain, and at least one fluorine atom is contained in any of X¹ to X³ and R¹. Among them, fluorine-containing ethylenic monomers having hydroxyl group and represented by the formula (II) are preferred. 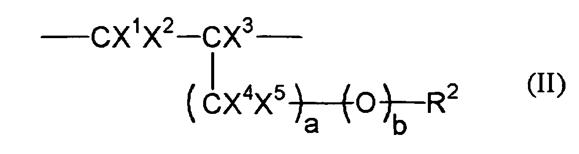 wherein X¹ and X² may be the same or different and each is fluorine atom or hydrogen atom; X³ is fluorine atom, hydrogen atom, chlorine atom, methyl group or trifluoromethyl group; X⁴ and X⁵ may be the same or different and each is hydrogen atom, fluorine atom, methyl group or trifluoromethyl group; a is 0 or an integer of 1 to 3; b is 0 or 1; R² is a chain or branched alkyl group, fluoroalkyl group or perfluoroalkyl group having 1 to 29 carbon atoms and at least one hydroxyl group and may have an ether bond, ester bond or urethane bond in its chain, and at least one fluorine atom is contained in any of X¹ to X⁵ and R2.

Further preferred fluorine-containing ethylenic monomers having hydroxyl group are represented by the formula (III). 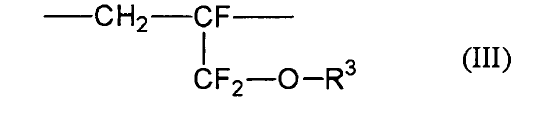 wherein R³ is a chain or branched alkyl group, fluoroalkyl group or perfluoroalkyl group having 1 to 29 carbon atoms and at least one hydroxyl group and may have an ether bond, ester bond or urethane bond in its chain.

Next, hydroxyl group contained in R¹ to R³ is explained. A carbon atom to which hydroxyl group is directly bonded can be generally classified into three kinds such as primary carbon atom, secondary carbon atom and tertiary carbon atom, depending on the number of carbon atoms bonded to the carbon atom to which hydroxyl group is bonded.

First, in the case of primary carbon atom, the number of carbon atoms bonded to a carbon atom to which hydroxyl group is bonded is one like R-CH₂-OH, where R is an organic group having one or more carbon atoms.

Specifically, examples of a monovalent organic group having hydroxyl group are:

-CH₂OH, -CH₂CH₂OH,

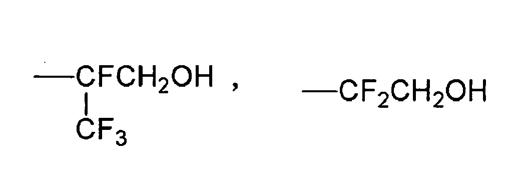

and the like.

Next, in the case of secondary carbon atom, the number of carbon atoms bonded to a carbon atom to which hydroxyl group is bonded is two like R-CR'H-OH, where R and R' are organic groups having one or more carbon atoms.

Specifically, examples of a monovalent organic group having hydroxyl group are: 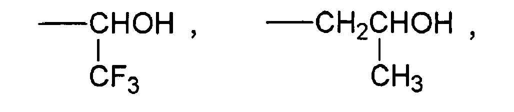 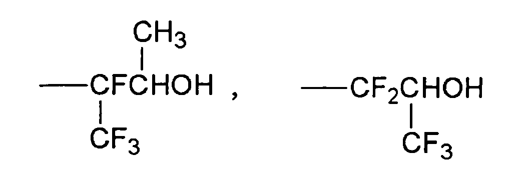 and the like.

Next, in the case of tertiary carbon atom, the number of carbon atoms bonded to a carbon atom to which hydroxyl group is bonded is three like R-CR'R"-OH, where R, R' and R" are organic groups having one or more carbon atoms.

Specifically, examples of a monovalent organic group having hydroxyl group are: 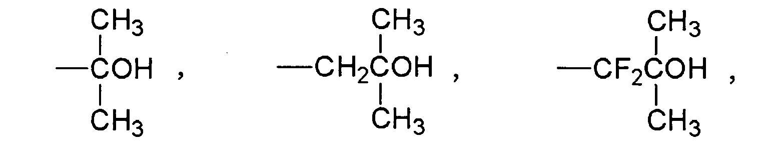 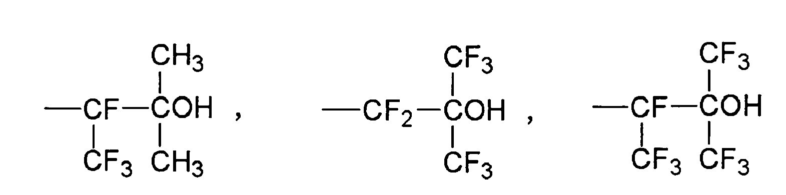 and the like.

Among these, preferred is hydroxyl group bonded to primary carbon atom or secondary carbon atom from the viewpoint of steric hindrance, and more preferred is hydroxyl group bonded to primary carbon atom from the viewpoint of reactivity.

Next, the structures of R¹ to R³ are explained below using Y provided that a monovalent hydroxyl group-containing organic group having 1 to 10 carbon atoms and hydroxyl group bonded to the above-mentioned primary, secondary or tertiary carbon atom is Y¹. Y represents Y¹ or simply represents hydroxyl group. 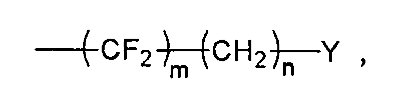 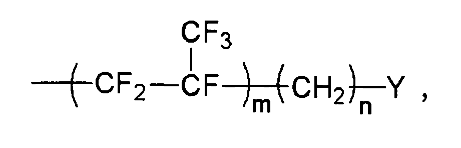 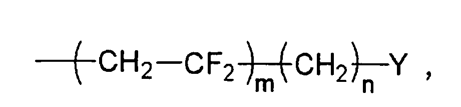 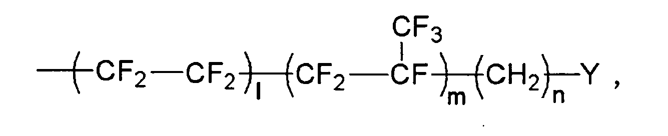 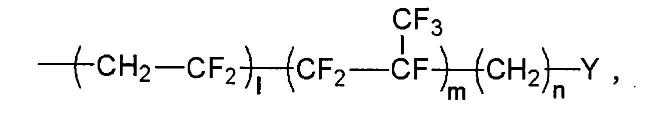 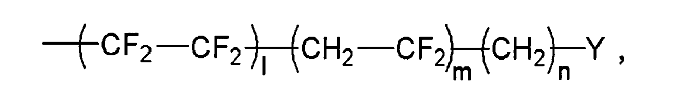 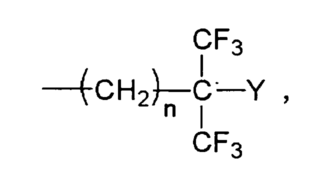 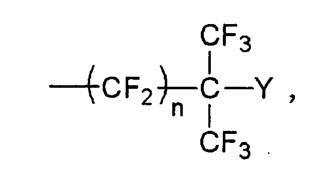 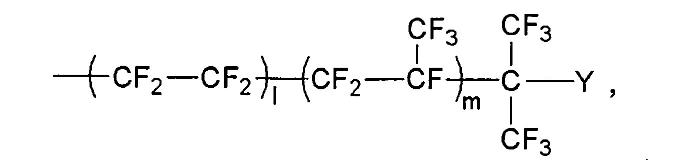 wherein 1, m and n are integers and 1 is 1 to 10, m is 1 to 10 and n is 1 to 5, 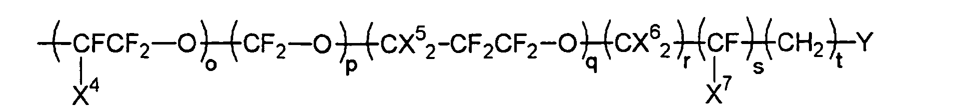 and 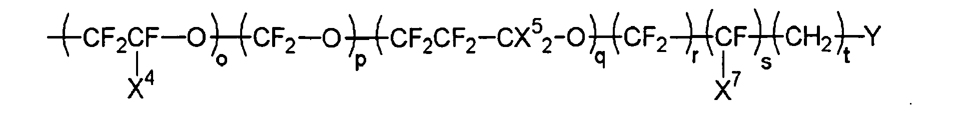 wherein X⁴ and X⁷ are F or CF₃, X⁵ and X⁶ are H or F, o+p+q is 1 to 10, r is 0 or 1, and s and t are 0 or 1.

Examples of the formula (III) are: 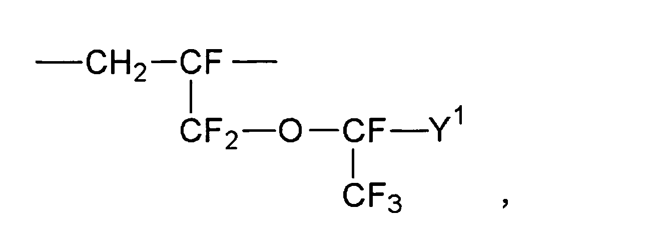 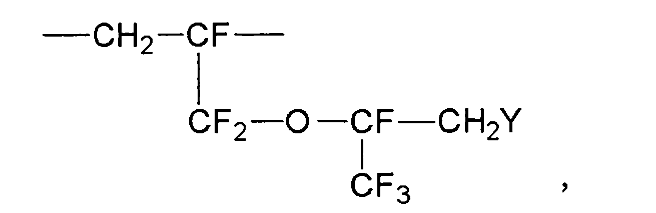 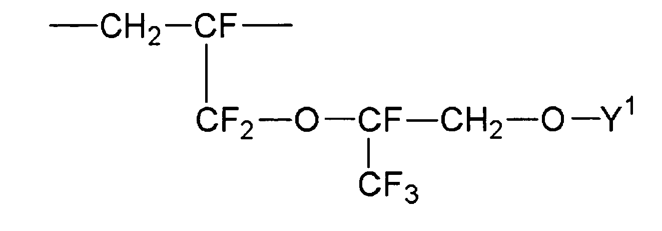 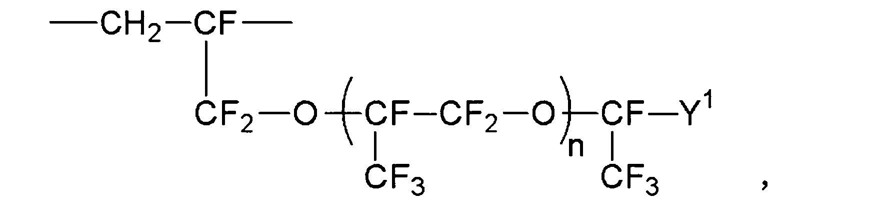 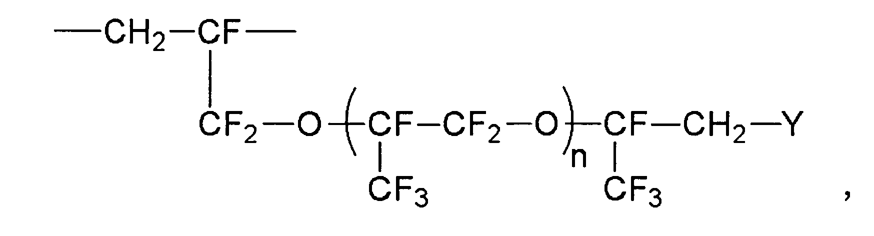 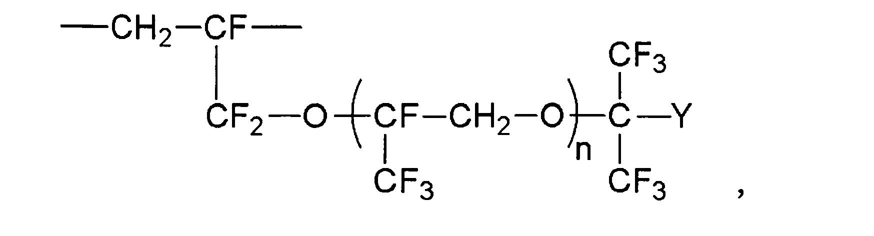 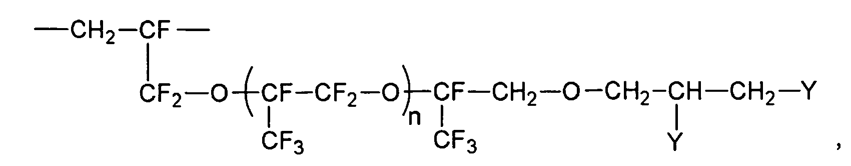 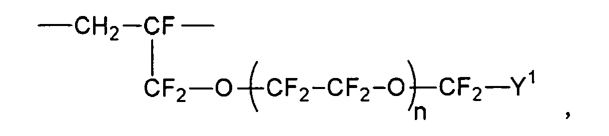 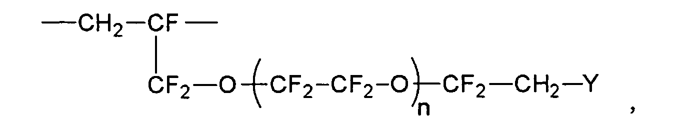 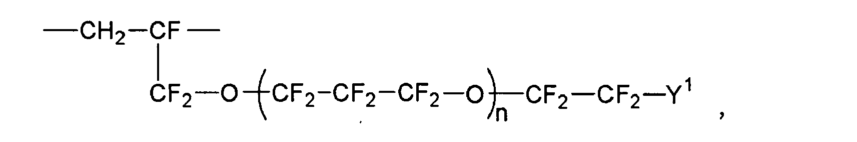 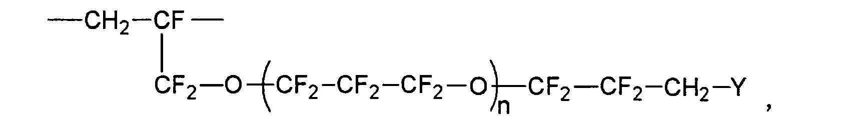 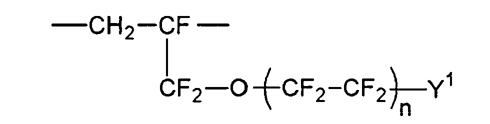 and

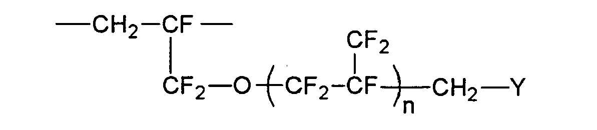

More specifically, there are: 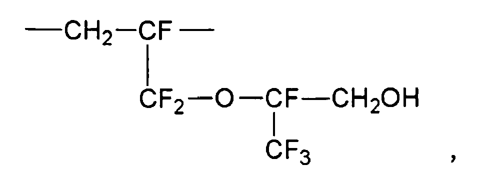 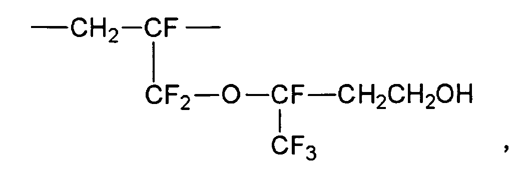 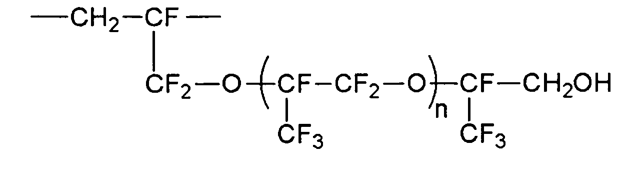 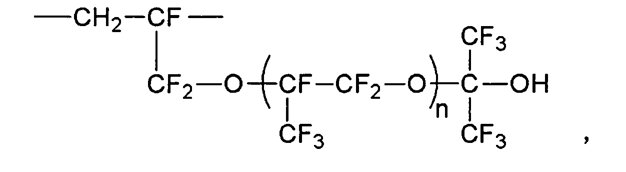 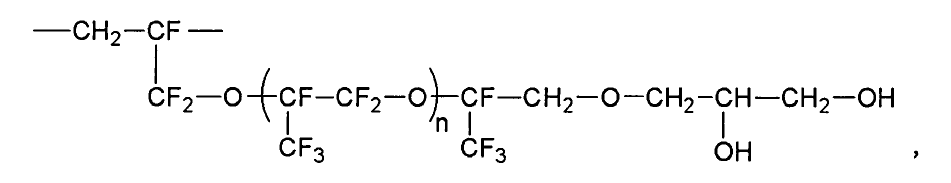 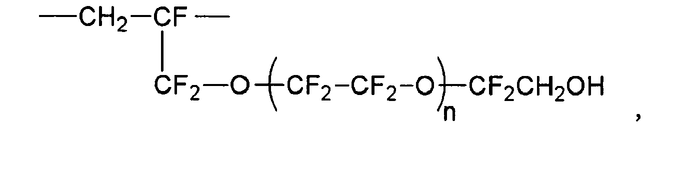 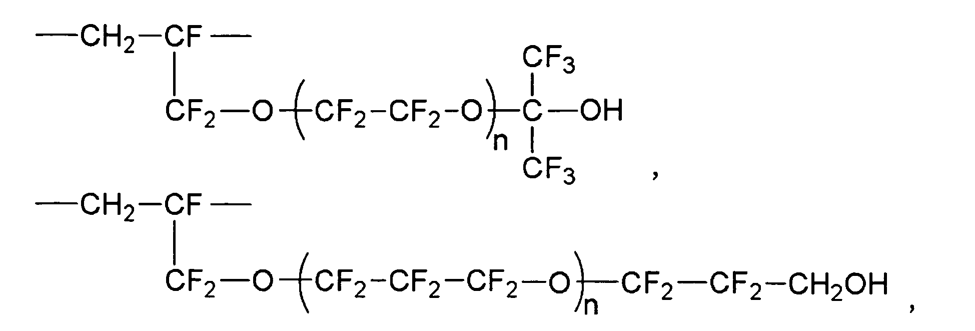 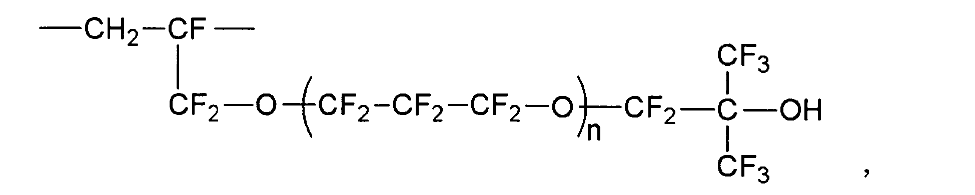 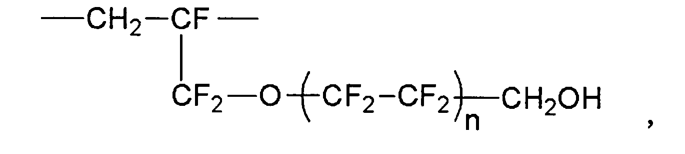 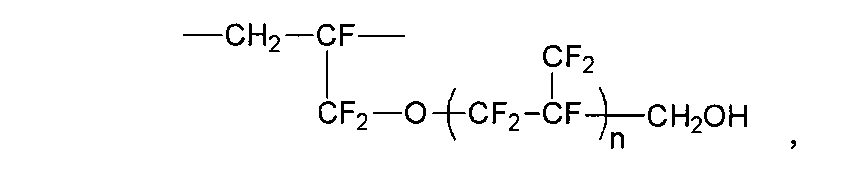 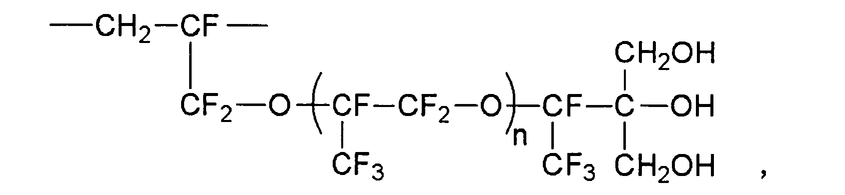 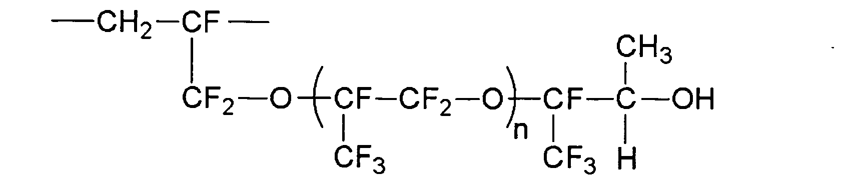 and the like.

Among these, from the viewpoint of solubility in the acrylic monomer and reactivity with the isocyanate group (-NCO), 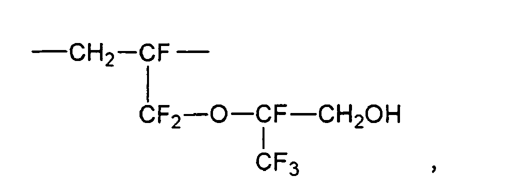 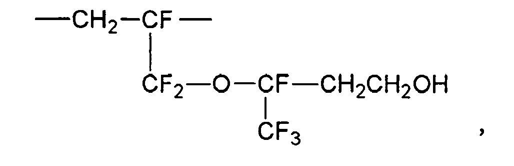 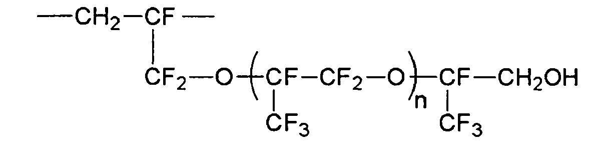 and 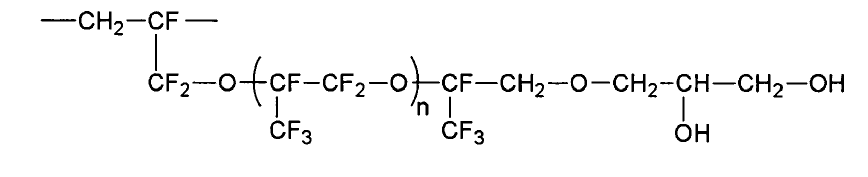 are especially preferred.

The fluorine-containing polymer having hydroxyl group may further contain a monomer unit having no hydroxyl group in its structural unit to an extent not to impair solubility in the acryl. There can be used, as such a monomer unit, all of monomer units having no hydroxyl group among the structural units A and M described in WO 02/18457.

Among these, from the viewpoint of solubility in the acrylic monomer,

-CH₂-CF₂-, -CH₂-CF(CF₃)-,

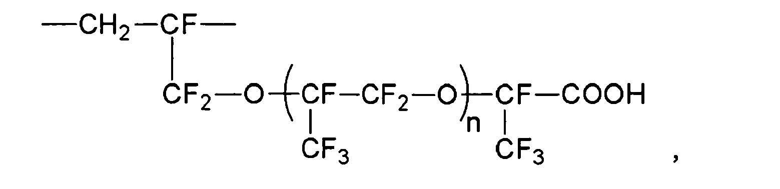

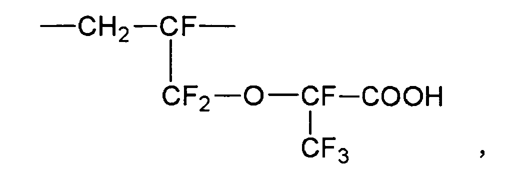

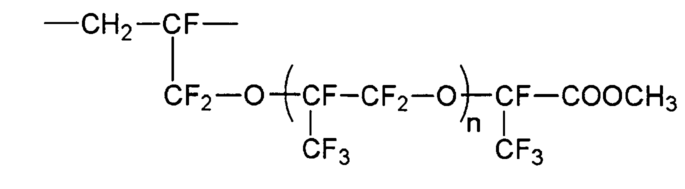

and 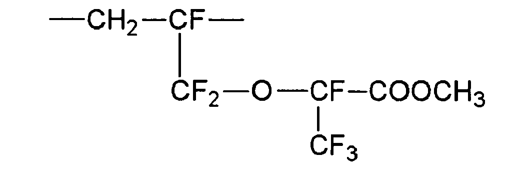 are preferred.

From the viewpoint of solubility in the acrylic monomer and reactivity with NCO, examples of the fluorine-containing polymer having hydroxyl group are: 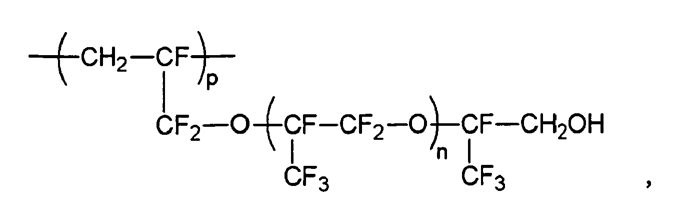 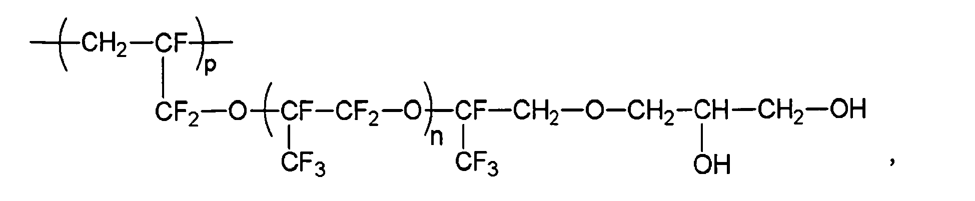 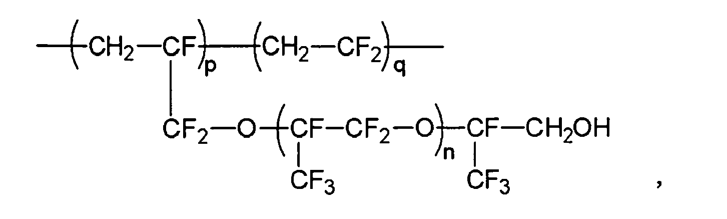 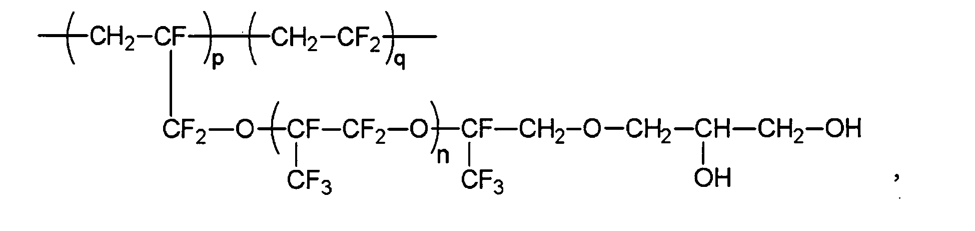 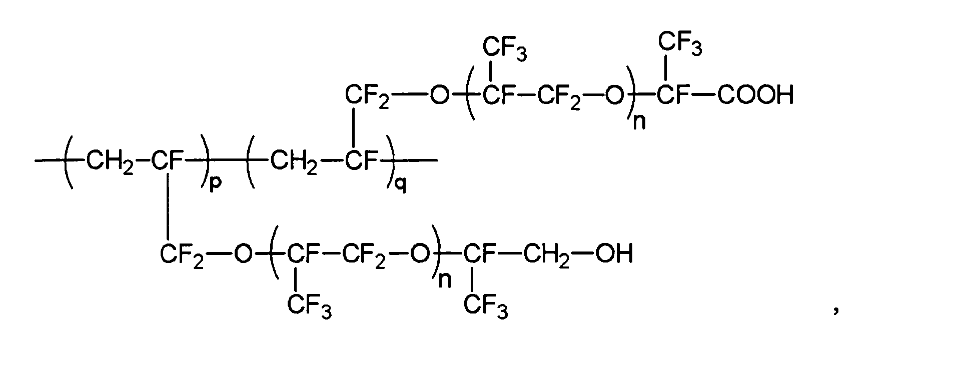 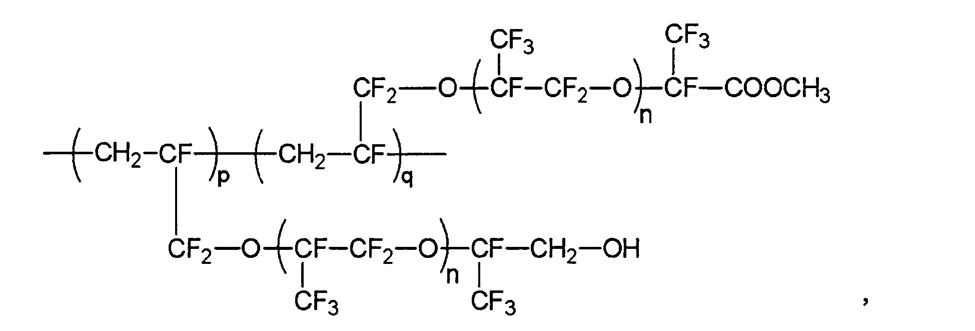 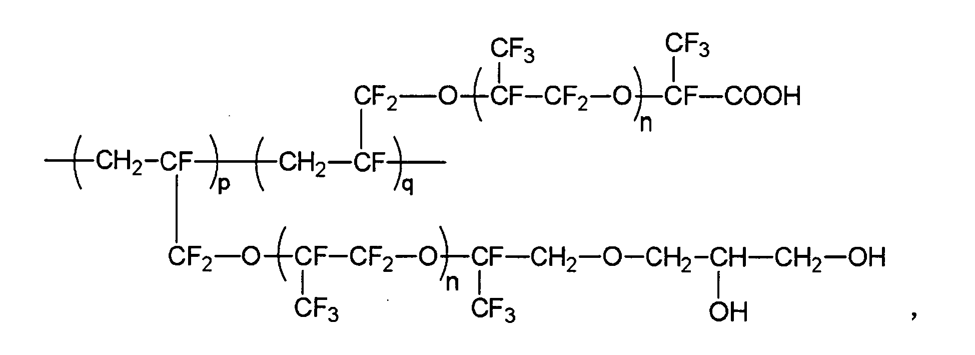 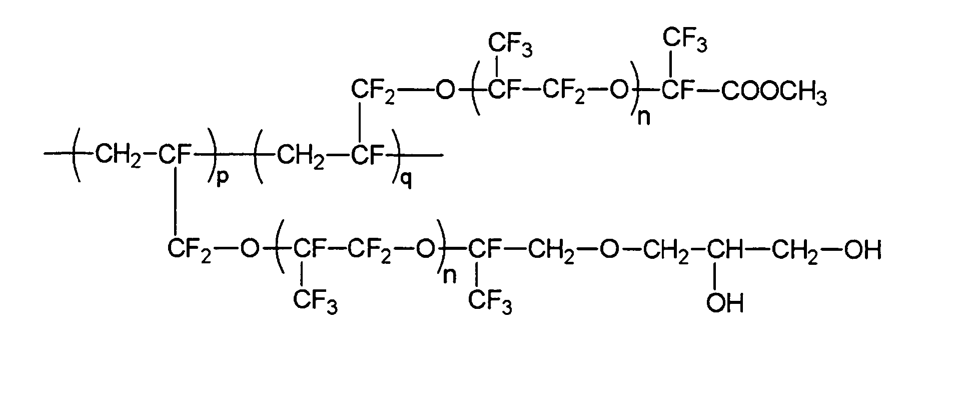 and the like, wherein a ratio of p to q is 20/80 to 99/1 in molar ratio.

Examples of the radically polymerizable unsaturated group in the isocyanate group-containing unsaturated compound (A-2) are methacryl group, acryl group, 2-fluoroacryl group and 2-chloroacryl group, and from the viewpoint of polymerization reactivity, cost and easy synthesis, methacryl group and acryl group are preferred, and acryl group is especially preferred.

Examples of the isocyanate group-containing unsaturated compound (A-2) are alkyl vinyl ethers and alkyl allyl ethers represented by the formula (IV): 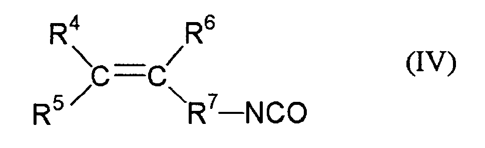 wherein R⁴, R⁵ and R⁶ may be the same or different and each is hydrogen atom, fluorine atom, chlorine atom or an alkyl group having 1 to 4 carbon atoms, and R⁷ is -COO-R⁸-, -OCO-R⁸- or -O-R⁸- (R⁸ is an alkyl group having 1 to 20 carbon atoms).

Examples of the isocyanate group-containing unsaturated compound (A-2) are 2-isocyanateethyl acrylate (formula (V)):

CH₂=CHCOOCH₂CH₂NCO (V),

2-isocyanateethyl methacrylate (formula (VI)):

CH₂=C(CH₃)COOCH₂CH₂NCO (VI),

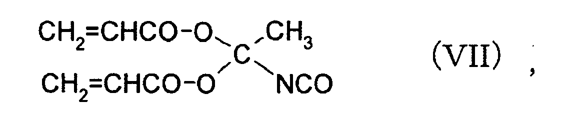

4-isocyanatebutyl acrylate, 4-isocyanatebutyl methacrylate, and the like.

Further, there are reaction products having one isocyanate group prepared by allowing polyisocyanate to react with unsaturated monoalcohol. Examples of polyisocyanate are 2,4-tolylene diisocyanate, 2,6-tolylene diisocyanate, a mixture of isocyanates of 2,4-tolylene diisocyanate and 2,6-tolylene diisocyanate, P,P'-diphenylmethane diisocyanate, 1,5-naphthylene diisocyanate, p-phenylene diisocyanate, 1,6-hexamethylene diisocyanate, isophorone diisocyanate and hydrogenated xylylene diisocyanate. Examples of unsaturated monoalcohol are monoalcohols having acryloyl group or methacryloyl group such as 2-hydroxyethyl acrylate, 2-hydroxyethyl methacrylate, 2-hydroxypropyl acrylate, 2-hydroxypropyl methacrylate, 4-hydroxybutyl acrylate and 4-hydroxybutyl methacrylate, and monoalcohols having allyl group such as allyl alcohol, allyl cellosolve and trimethylpropane diallyl ether. Among these, from the viewpoint of easy synthesis and high reactivity, 2-isocyanateethyl acrylate or 2-isocyanateethyl methacrylate is preferred.

The reaction product (A) is one obtained by urethane bonding of the hydroxyl group of the fluorine-containing polymer (A-1) having hydroxyl group to the isocyanate group of the isocyanate group-containing unsaturated compound (A-2).

The fluorine content of the reaction product (A) is preferably not less than 20 % by mass from the viewpoint of satisfactory weather resistance, water- and oil-repellency and stain-proofing property, more preferably not less than 40 % by mass, further preferably not less than 50 % by mass, from the viewpoint of satisfactory transparency in a wide wavelength range from visible region to near infrared region. Also, the fluorine content of the reaction product (A) is preferably not more than 75 % by mass, more preferably not more than 70 % by mass, further preferably not more than 65 % by mass, from the viewpoint of satisfactory solubility in acrylic monomer.

The number average molecular weight of the reaction product (A) is preferably not less than 1,000, more preferably not less than 2,000, further preferably not less than 3,000, from the viewpoint of satisfactory strength and surface hardness of a cured article obtained by preparing a curable composition and curing it. Also, the number average molecular weight of the reaction product (A) is preferably not more than 500,000 from the viewpoint that viscosity does not become high and handling is easy, more preferably not more than 100,000 from the viewpoint of satisfactory solubility in acrylic monomer, further preferably not more than 50,000 from the viewpoint that viscosity of the composition is low and handling of it is easy.

The acrylic monomer (B) in the present invention is a monomer having one of acryloyl group, methacryloyl group, 2-fluoroacryloyl group or 2-chloroacryloyl group or two or more of them, and differs from the isocyanate group-containing unsaturated compound (A-2) having radically reactive group.

The number of radically polymerizable unsaturated groups in the acrylic monomer (B) is preferably one from the viewpoint that solubility of the fluorine-containing polymer (A-1) having hydroxyl group is high and viscosity is low, more preferably two or more from the viewpoint of satisfactory strength of a cured article obtained by preparing a curable composition and curing it, further preferably three or more from the viewpoint of satisfactory curing speed of the curable composition.

Examples of the acrylic monomer (B) are methyl methacrylate (MMA), methacrylic acid (MA), ethyl methacrylate (EMA), n-butyl methacrylate (nBMA), isobutyl methacrylate (iBMA), 2-ethylhexyl methacrylate, 2-hydroxyethyl methacrylate (HEMA), phenyl methacrylate, cyclohexyl methacrylate, 3-(trimethoxysilyl)propyl methacrylate (MSPM), 2-(phenylphosphoryl)ethyl methacrylate (phenyl-P), 2-hydroxy-3-(β-naphthoxy)propyl methacrylate (HNPM), N-phenyl-N-(2-hydroxy-3-methacryloxy)propyl glycine (NPG-GMA), ethylene glycol dimethacrylate (EDMA or 1G), diethylene glycol dimethacrylate (DiEDMA), triethylene glycol dimethacrylate (TriEDMA), 1,4-butanediol dimethacrylate (1,4-BuDMA), 1,3-butanediol dimethacrylate (1,3-BuDMA), 1,6-hexanediol diacrylate (16HX); 2,2-bis[4-(2-hydroxy-3-methacryloxypropoxy)phenyl]propane (Bis-GMA), 2,2-bis(4-methacryloxyphenyl)propane (BPDMA), 2,2-bis(4-methacryloxyethoxyphenyl)propane (Bis-MEPP), 2,2-bis(4-methacryloxypolyethoxyphenyl)propane (Bis-MPEPP), di(methacryloxyethyl)trimethylhexamethylenediurethane (UDMA), trimethylolpropane trimethacrylate (TMPA), pentaerythritol triacrylate, pentaerythritol tetraacrylate and dipentaerythritol hexaacrylate (DPEHA). Also, there are exemplified acrylates, 2-fluoroacrylates and 2-chloroacrylates corresponding thereto.

Also, examples of fluorine-containing acrylic monomer are CH₂=C(CH₃)COOCH₂CF₃ (3FMA), CH₂=C(CH₃)COOCH₂CF₂CF₂H (4FMA), CH₂=C(CH₃)COOCH₂CF₂CF₃ (5FMA), CH₂=C(CH₃)COOCH₂CF₂CFHCF₃ (6FMA), CH₂=C(CH₃)COOCH₂(CF₂)₃CF₂H (8FMA), CH₂=C(CH₃)COOCH₂CH₂(CF₂)₃CF₃ (9FMA), CH₂=C(CH₃)COOCH₂(CF₂)₅CF₂H (12FMA), CH₂=C(CH₃)COOCH₂CH₂(CF₂)₅CF₃ (13FMA), CH₂=C(CH₃)COOCH₂CH₂(CF₂)₇CF₃ (17FMA), CH₂=C(CH₃)COOCH(CF₃)₂ (HFIP-MA), CH₂=C(CH₃)COOCH₂CCH₃(CF₃)₂ (6FNP-MA), CH₂=C(CH₃)COOCH₂CF(CF₃)OCF₂CF₂CF₃ (6FOn1-MA), and acrylates, 2-fluoroacrylates and 2-chloroacrylates corresponding thereto.

Examples of the above-mentioned 2-fluoroacrylates are CH₂=CFCOOCH₂CF₂CF₂H (4FFA), CH₂=CFCOOCH₂CF₂CF₃ (5FFA), CH₂=CFCOOCH₂(CF₂)₃CF₂H (8FFA), CH₂=CFCOOCH₂(CF₂)₅CF₂H (12FFA), CH₂=CFCOOCH(CF₃)₂ (HFIP-FA), and the like.

There are the acrylic monomers raised above, and methyl methacrylate, ethyl methacrylate, methyl acrylate and ethyl acrylate are preferred from the viewpoint of satisfactory solubility of the fluorine-containing polymer (A-1) having hydroxyl group, the isocyanate group-containing unsaturated compound (A-2) and the reaction product (A) thereof.

The mass ratio of the reaction product (A) to the acrylic monomer (B) is preferably 95:5 to 5:95, more preferably 80:20 to 20:80, further preferably 70:30 to 30:70. If the mass ratio of the reaction product (A) to the acrylic monomer (B) deviates from 95:5 and the mass of the reaction product (A) is increased more, there is a tendency that viscosity becomes higher and handling is difficult. If the mass ratio of the reaction product (A) to the acrylic monomer (B) deviates from 5:95 and the mass of the reaction product (A) is decreased more, the fluorine content decreases, and therefore, there is a tendency that weather resistance, water- and oil-repellency and stain-proofing property of a cured article obtained by curing the curable composition are lowered.

Viscosity at 30°C of the curable resin composition is preferably not less than 5 mPa·s because in the case of too low viscosity, a lot of sagging occurs and handling of the composition becomes difficult, more preferably not less than 10 mPa·s from the viewpoint of satisfactory property of forming a thin film, further preferably not less than 50 mPa·s since shrinkage due to curing is small. Also, viscosity at 30°C of the curable resin composition is preferably not more than 100,000 mPa·s because handling property of it is satisfactory, more preferably not more than 50,000 mPa·s since the curable composition is spread to every portion on a mold surface at mold-processing, further preferably not more than 20,000 mPa·s since leveling property (surface smoothness) is satisfactory when a thin film is formed.

The curable resin composition of the present invention may further comprise a curing agent. The curing agent is a compound undergoing crosslinking by reaction with curable reaction group of the fluorine-containing polymer (A-1) having hydroxyl group, and for example, isocyanates having no unsaturated bond, amino resins, acid anhydrides, polyepoxy compounds and isocyanate group-containing silane compounds are usually used.

Nonlimiting examples of the above-mentioned isocyanates having no unsaturated bond are 2,4-tolylene diisocyanate, diphenylmethane-4,4'-diisocyanate, xylylene diisocyanate, isophorone diisocyanate, lysine methyl ester diisocyanate, methylcyclohexyl diisocyanate, trimethylhexamethylene diisocyanate, hexamethylene diisocyanate, n-pentane-1,4-diisocyanate, trimers thereof, adducts and biurets thereof, polymers thereof having two or more isocyanate groups, blocked isocyanates and the like.

Non-limiting examples of the amino resin are urea resin, melamine resin, benzoguanamine resin, glycoluril resin, methylolated melamine resin obtained by methylolating melamine, alkyl-etherified melamine resin obtained by etherification of methylolated melamine with alcohol such as methanol, ethanol or butanol.

Non-limiting examples of the acid anhydride are phthalic anhydride, pyromellitic anhydride, mellitic anhydride and the like.

With respect to the polyepoxy compound and isocyanate group-containing silane compound, those disclosed, for example, in JP2-232250A, JP2-232251A and the like can be used. Suitable examples are: 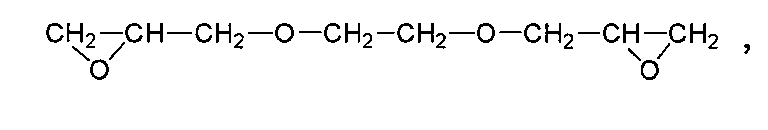 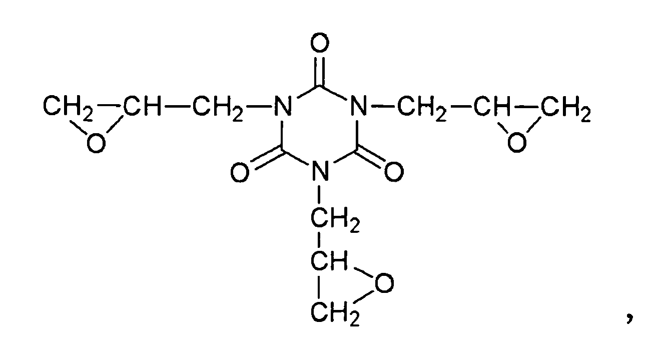 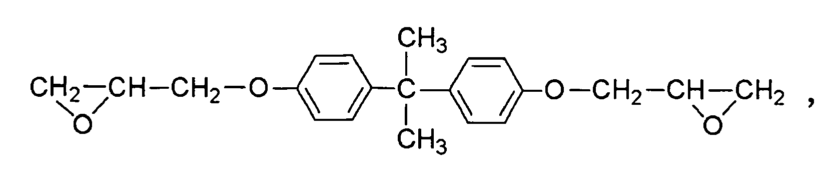 OCNC₃H₆Si(OC₂H₅)₃, OCNC₂H₄Si(OCH₃)₃
and the like.

The amount of curing agent is from 0.1 to 5 equivalent, preferably from 0.5 to 1.5 equivalent based on one equivalent of chemically curable reaction group in the fluorine-containing polymer (A-1) having hydroxyl group. The composition of the present invention can be cured usually at 0°C to 200°C for several minutes to about 10 days.

Also, since the reaction product (A) and the acrylic monomer (B) are subjected to polymerization by irradiation of UV for curing of the curable resin composition of the present invention, a photo-polymerization initiator may be contained in the curable resin composition. Examples of the photo-polymerization initiator are acetophenone compounds such as acetophenone, chloroacetophenone, diethoxyacetophenone, hydroxyacetophenone and α-aminoacetophenone; benzoin compounds such as benzoin, benzoin methyl ether, benzoin ethyl ether, benzoin isopropyl ether, benzoin isobutyl ether and benzyl dimethyl ketal; benzophenone compounds such as benzophenone, benzoylbenzoic acid, methylo-benzoylbenzoate, 4-phenylbenzophenone, hydroxybenzophenone, hydroxy-propylbenzophenone, acrylated benzophenone, Michler's ketone and 2-hydroxy-2-methylpropiophenone; thioxanthones such as thioxanthone, chlorothioxanthone, methylthioxanthone, diethylthioxanthone and dimethylthioxanthone; and other compounds such as benzyl, α-acyloxime ester, acylphosphine oxide, glyoxyester, 3-ketocoumaran, 2-ethylanthraquinone, camphorquinone and anthraquinone.

Also, as case demands, a known auxiliary for photo-initiation such as amines, sulfones or sulfines may be added.

It is preferable that the curable resin composition of the present invention contains neither an organic solvent having no radically reactive group nor a fluorine-containing solvent from the viewpoint that no step for removing a solvent is necessary after the curing of the curable resin composition and there is no adverse effect such as lowering of heat resistance, lowering of strength and white turbidity due to a remaining solvent. Examples of an organic solvent having no radically reactive group are aliphatic hydrocarbons such as hexane, cyclohexane, heptane, octane, nonane, decane, undecane, dodecane and mineral spirit; aromatic hydrocarbons such as benzene, toluene, xylene, naphthalene and solvent naphtha; esters such as methyl acetate, ethyl acetate, propyl acetate, n-butyl acetate, isobutyl acetate, isopropyl acetate, isobutyl acetate, cellosolve acetate, propylene glycol methyl ether acetate, carbitol acetate, diethyl oxalate, ethyl pyruvate, ethyl-2-hydroxybutyrate, ethyl acetoacetate, amyl acetate, methyl lactate, ethyl lactate, methyl 3-methoxypropionate, ethyl 3-methoxypropionate, methyl 2-hydroxyisobutyrate and ethyl 2-hydroxyisobutyrate; ketones such as acetone, methyl ethyl ketone, cyclohexanone, methyl isobutyl ketone, 2-hexanone, cyclohexanone, methyl amino ketone and 2-heptanone; glycol ethers such as ethyl cellosolve, methyl cellosolve, methyl cellosolve acetate, ethyl cellosolve acetate, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether and ethylene glycol monoalkyl ether; alcohols such as methanol, ethanol, iso-propanol, n-butanol, isobutanol, tert-butanol, sec-butanol, 3-pentanol, octyl alcohol, 3-methyl-3-methoxybutanol and tert-amyl alcohol; cyclic ethers such as tetrahydrofuran, tetrahydropyran and dioxane; amides such as N,N-dimethylformamide and N,N-dimethylacetamide; ether alcohols such as methyl cellosolve, cellosolve, isopropyl cellosolve, butyl cellosolve and diethylene glycol monomethyl ether; 1,1,2-trichloro-1,2,2-trifluoroethane, 1,2-dichloro-1,1,2,2-tetrafluoroethane, dimethyl sulfoxide, and the like. Also, there are solvent mixtures of two or more thereof.

Examples of the fluorine-containing solvent are CH₃CCl₂F (HCFC-141b), a mixture of CF₃CF₂CHCl₂ and CClF₂CF₂CHClF (HCFC-225), perfluorohexane, perfluoro(2-butyltetrahydrofuran), methoxy-nonafluorobutane, 1,3-bistrifluoromethylbenzene, and in addition, fluorine-containing alcohols such as:
H(CF₂CF₂)ₙCH₂OH (n: an integer of from 1 to 3),
F(CF₂)ₙCH₂OH (n: an integer of from 1 to 5) and
CF₃CH(CF₃)OH,
benzotrifluoride, perfluorobenzene, perfluoro(tributylamine), ClCF₂CFClCF₂CFCl₂ and the like.

There are fluorine-containing solvents alone, a mixture thereof or a mixture of one or more of the fluorine-containing solvents and non-fluorine-containing solvents.

Further, the curable resin composition of the present invention can be formed into so-called solvent-free type curable resin composition by using neither an organic liquid (organic solvent) other than the acrylic monomer (B) nor water. By forming into such a solvent-free type, removal of an organic solvent is not necessary, a molding step can be simplified, and a problem that in the case of insufficient removal of an organic solvent, it remains in a cured article does not arise. Also problems such as lowering of heat resistance and mechanical strength and white turbidity due to an effect of the remaining organic solvent do not occur. Further, a solvent-free type curable resin composition is useful for the case where a volatile component is not allowed in view of mold-processing conditions. For example, there are applications such as filling inside the closed vessel and sealing thereof.

Also, the present invention relates to the process for preparing the curable resin composition comprising a step of dissolving, in the acrylic monomer (B), the fluorine-containing polymer (A-1) having hydroxyl group and the isocyanate group-containing unsaturated compound (A-2) having one isocyanate group and at least one radically polymerizable unsaturated group, and a step of allowing the fluorine-containing polymer (A-1) having hydroxyl group to react with the isocyanate group-containing unsaturated compound (A-2) in the acrylic monomer (B).

The fluorine-containing polymer (A-1) having hydroxyl group is prepared by polymerizing a monomer mixture comprising a fluoroolefin and a radically polymerizable hydroxyl group-containing unsaturated monomer.

With respect to a fluoroolefin and a radically polymerizable hydroxyl group-containing unsaturated monomer, the above-mentioned fluoroolefin unit and radically polymerizable hydroxyl group-containing unsaturated monomer unit can be used.

The process for preparing the fluorine-containing polymer (A-1) having hydroxyl group is not limited particularly, and known polymerization conditions can be employed. Since the fluorine-containing polymer (A-1) having hydroxyl group dissolves in the acrylic monomer (B), a form (for example, particle size) of the polymerization product does not come into question.

The mass ratio of the acrylic monomer (B) to the fluorine-containing polymer (A-1) having hydroxyl group is not limited particularly as far as the fluorine-containing polymer (A-1) having hydroxyl group dissolves uniformly in the acrylic monomer (B). Unless the fluorine-containing polymer (A-1) having hydroxyl group dissolves uniformly, reaction thereof with the isocyanate group-containing unsaturated compound (A-2) having one isocyanate group and at least one radically polymerizable unsaturated group becomes difficult or does not proceed uniformly, and as a result, physical properties of a cured article such as heat resistance and transparency are lowered.

When dissolving the fluorine-containing polymer (A-1) having hydroxyl group and the isocyanate group-containing unsaturated compound (A-2) in the acrylic monomer (B), it is preferable not to use an organic solvent having no radically reactive group. Examples of an organic solvent having no radically reactive group are organic solvents explained supra.

The reaction of the fluorine-containing polymer (A-1) having hydroxyl group with the isocyanate group-containing unsaturated compound (A-2) means that the hydroxyl group of the fluorine-containing polymer (A-1) having hydroxyl group is allowed to react with the isocyanate group of the isocyanate group-containing unsaturated compound (A-2) to form urethane bond.

Ii is preferable that the reaction of the fluorine-containing polymer (A-1) having hydroxyl group with the isocyanate group-containing unsaturated compound (A-2) is carried out under the condition of the acrylic monomer (B) undergoing no reaction substantially in the absence of an organic solvent having no radically reactive group.

In the reaction of the fluorine-containing polymer (A-1) having hydroxyl group with the isocyanate group-containing unsaturated compound (A-2), the reaction temperature is preferably not less than 5°C from the viewpoint of satisfactory reactivity, and is more preferably not less than 10°C, further preferably not less than 20°C, from the viewpoint that viscosity of a system decreases, and as a result, a reaction speed is accelerated. Also, a higher reaction temperature is preferred from the viewpoint that as far as the acrylic monomer (B) dissolving the copolymer undergoes no reaction substantially and thermal stability of additives is maintained, viscosity of the composition is decreased and a reaction speed is fast, thereby making it unnecessary to add a curing accelerator and the like. However, the temperature is preferably not more than 80°C practically in consideration of thermal stability of the acrylic monomer, preferably not more than 60°C in the case of using 2-fluoroacryl monomer or the like having high polymerization reactivity, further preferably not more than 50°C in consideration of storage stability.

A ratio of the number of isocyanate groups in the isocyanate group-containing unsaturated compound (A-2) to the number of hydroxyl groups in the fluorine-containing copolymer (A-1) having hydroxyl group is preferably 0.01:1 to 1:1, where the number of isocyanate groups is the same or smaller than the number of hydroxyl groups, more preferably 0.1:1 to 1:1 from the viewpoint of satisfactory reactivity with the acrylic monomer at curing, further preferably 0.2:1 to 0.8:1 from the viewpoint that solubility in the acrylic monomer is good when the hydroxyl group of the fluorine-containing copolymer (A-1) having hydroxyl group remains as a residue. When the ratio of the number of isocyanate groups in the isocyanate group-containing unsaturated compound (A-2) to the number of hydroxyl groups in the fluorine-containing copolymer (A-1) having hydroxyl group is beyond 0.01:1 1 and the number of isocyanate groups is smaller, reaction with the acrylic monomer becomes insufficient and as a result, there is a tendency that a cured article becomes turbid in white or mechanical strength of a cured article is decreased. When the ratio of the number of isocyanate groups to the number of hydroxyl groups is beyond 1:1 and the number of isocyanate groups is larger, excessive isocyanates remain as a residual in the composition, and characteristics of a cured article tends to be lowered.

To the curable resin composition of the present invention may be optionally added, for example, a curing accelerator, a pigment, a dispersant, a thickener, a preserving agent, an ultraviolet absorber, a defoaming agent and a leveling agent in addition to those mentioned above.

Examples of a curing accelerator are organotin compound, acidic phosphoric acid ester, a reaction product of acidic phosphoric acid ester and amine, saturated or unsaturated polycarboxylic acid or its acid anhydride, organotitanium compound, amine compound and lead octylate.

Examples of the above-mentioned organotin compound are dibutyltindilaurate, dibutyltinmaleate, dioctyltinmaleate, dibutyltindiacetate, dibutyltinphthalate, tin octylate, tin naphthenate and dibutyltinmethoxide.

Acidic phosphoric acid ester means phosphoric acid ester having a moiety of: 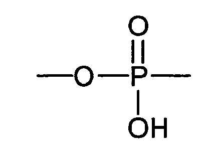 and examples thereof are organic acidic phosphoric acid esters represented by: 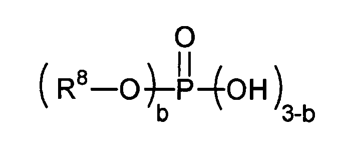 wherein b is 1 or 2, and R⁸ represents an organic residue. Examples thereof are 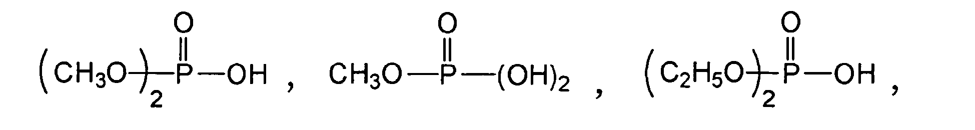 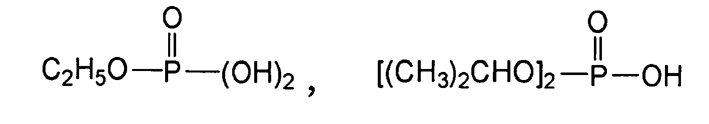 and the like.

Examples of the above-mentioned organotitanium compound are titanic acid esters such as tetrabutyltitanate, tetraisopropyltitanate and triethanolamine titanate.

Further, examples of the above-mentioned amine compound are amine compounds such as butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine and 1,8-diazabicyclo(5.4.0)undecene-7 (DBU), their salts of carboxylic acids, low molecular weight polyamide resin obtained from excessive polyamine and polybasic acid, and a reaction product of excessive polyamine and epoxy compound.

With respect to the curing accelerator, one kind may be used alone and two or more kinds may be used together. The amount of curing agent is preferably 1.0 × 10⁻⁶ to 1.0 × 10⁻² part by mass, more preferably 5.0 × 10⁻⁵ to 1.0 × 10⁻³ part by mass based on 100 parts by mass of the polymer.

The curable resin composition of the present invention can be used in various forms for various applications.

For example, a cured film is formed and can be used for various applications. For forming a film, proper known methods can be employed depending on applications. For example, when control of a film thickness is necessary, a roll coating method, a gravure coating method, a micro gravure coating method, a flow coating method, a bar coating method, a spray coating method, a die coating method, a spin coating method and a dip coating method can be employed.

While the curable resin composition of the present invention may be formed into a film, it is especially useful as a molding material for various molded articles. With respect to the molding method, extrusion molding, injection molding, compression molding, blow molding, transfer molding, photo-fabrication, nanoimprint and vacuum molding can be employed.

Examples of applications of the curable resin composition of the present invention are sealing members, optical materials, photoelectric camera tube, various sensors and anti-reflection material.

Examples of the application of the sealing member are, for instance, packaging (sealing) and surface mount of optical functional devices such as light emitting elements, for example, light emitting diode (LED), electroluminescence device and non-linear optical device, and photodetectors such as CCD, CMOS and PD. Also there are sealing materials (or filling materials) for optical members such as lens for deep ultraviolet microscope and the like. Sealed optical devices are used for various applications. Nonlimiting examples thereof are light emitting elements for high-mount-stop-lamp, meter panel, back light of mobile phone and light source of remote controller of various electric appliances; photodetectors for automatic focus of camera and optical pick-up of CD/DVD, and the like.

The resin composition is used as an optical material having a low refractive index since it contains fluorine. For example, it is useful as a medium for optical transmission. It is usable especially for optical materials such as clad material of plastic clad optical fiber having a core of quartz or optical glass, clad material of all-plastic optical fiber having a plastic core, anti-reflection coating material, lens material, optical waveguide material, prism material, optical window material, optical memory disc material, non-linear optical element, hologram material, photorefractive material, and sealing material of light emitting element. Also, the composition can be used as materials for optical devices. Examples of known optical devices are functional elements such as optical waveguide, OADM, optical switch, optical filter, optical connector and optical branching filter and optical packaging such as optical wiring, and the composition is a material useful for forming these devices. Further, the composition is suitably used for functional elements for optical devices such as modulator, wavelength conversion element and optical amplifier by incorporating various functional compounds (non-linear optical material, fluorescence generating functional pigment, photorefractive material, etc.) to the composition.

In the case of sensor applications, especially optical sensor and pressure sensor, the composition is useful since there are effects of improving sensitivity and protecting a sensor by its water- and oil-repellency.

Examples of other applications of the composition are materials for sealing member for electronic semiconductor, water- and moisture-resistant adhesives and adhesives for optical parts and elements.

There are exemplified applications as mentioned above, but the application is not limited thereto.

### EXAMPLE

The present invention is then explained by means of examples, but is not limited to them.

Measuring methods employed herein are collectively explained as follows.

### (1) Measurement of number average molecular weight

The number average molecular weight is calculated from the data obtained by measuring by gel permeation chromatography (GPC) by using GPC HLC-8020 available from Toso Kabushiki Kaisha and columns available from Shodex (one GPC KF-801, one GPC KF-802 and two GPC KF-806M are connected in series) and flowing tetrahydrofuran (THF) as a solvent at a flowing rate of 1 ml/min.

### (2) Measurement of hydroxyl value

A hydroxyl value is obtained by an acetylation method using acetic anhydride.

### (3) Fluorine content

The fluorine content (% by mass) is obtained by burning 10 mg of a sample by an oxygen flask combustion method, absorbing cracked gas in 20 ml of de-ionized water and then measuring a fluorine ion concentration in the fluorine ion-containing solution through fluoride-ion selective electrode method (using a fluorine ion meter model 901 available from Orion).

### (4) Viscosity

A viscosity at 30°C is measured with a cone plate viscometer CV-1E available from Misec Corporation using a CP-100 cone at 100 rpm. A viscosity after becoming stable in 60 seconds is adopted (mPa·s).

### (5) Refractive index (n_{D})

A refractive index is measured at 25°C with Abbe's refractometer available from Kabushiki Kaisha Atago Kogaku Kiki Seisakusho using sodium D line (589nm) as light source.

### (6) Thermal decomposition temperature (Td)

A thermal decomposition temperature giving 1 % by mass of weight reduction is measured at a temperature elevating rate of 10°C/min under nitrogen atmosphere using a thermogravimeter (TGA-50 available from Shimadzu Corporation).

### (7) Light transmission

A value measured using a spectral transmittance curve of about 100 µm thick sample (cured film) at a wavelength of 300 to 800 nm with a recording spectrophotometer (U-3310 (trade name) available from Hitachi, Ltd.) is used.

### (8) Measurement of solvent resistance

A sample of 10 mm × 10 mm × 0.1 mm is dipped in 20 ml of butyl acetate, and is observed with naked eyes after allowing to stand at room temperature for eight hours.

### (9) Evaluation of heat resistance

Each sample is held at 150°C for one hour and then a change of its appearance is observed.

Fluorine-containing allyl ether polymers (a) to (d) having hydroxyl group as indicated below were synthesized.

### SYNTHESIS EXAMPLE 1

### (Synthesis of fluorine-containing allyl ether polymer (a) (PAEH-1) having hydroxyl group)

A 100 ml four-necked glass flask equipped with a stirrer and thermometer was charged with 20.4 g of perfluoro(1,1,9,9-tetrahydro-2,5-bistrifluoromethyl-3,6-dioxanonenol): 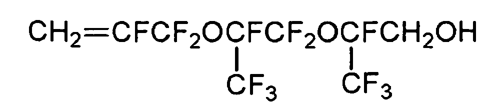 and 21.2 g of 8.0 % by weight perfluorohexane solution of [H(CF₂CF₂)₃COO]₂-, and the inside of the flask was sufficiently replaced with nitrogen, followed by 24-hour stirring at 20°C in nitrogen gas stream, and a solid having a high viscosity was produced.

The obtained solid was dissolved in diethyl ether and then poured into hexane, followed by separation and then vacuum drying to obtain 17.6 g of a colorless transparent polymer.

According to ¹⁹F-NMR analysis (measuring condition: 282 MHz (trichlorofluoromethane: 0 ppm)) and ¹H-NMR analysis (measuring condition: 300 MHz (tetramethylsilane: 0 ppm)) using NMR measuring equipment available from BRUKER and IR analysis (measured at room temperature with a Fourier-transform infrared spectrophotometer 1760X available from Perkin Elmer Co., Ltd.), the obtained polymer was a fluorine-containing polymer consisting of the structural unit of the above-mentioned fluorine-containing allyl ether and having hydroxyl group at an end of its side chain. The number average molecular weight of the polymer measured by GPC analysis using THF as a solvent was 9,000 and its weight average molecular weight was 22,000.

Tg=31°C, fluorine content (% by mass)=60, hydroxyl value (mgKOH/g)=137, refractive index=1.351.

### SYNTHESIS EXAMPLE 2

### (Synthesis of fluorine-containing allyl ether polymer (b) (PAEH-2) having hydroxyl group in its side chain)

A 100 ml four-necked glass flask equipped with a stirrer and thermometer was charged with 19.7 g of a fluorine-containing allyl ether represented by the following formula: 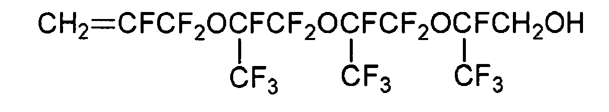 and 20.0 g of 8.0 % by weight perfluorohexane solution of [H(CF₂CF₂)₃COO]₂-, and the inside of the flask was sufficiently replaced with nitrogen, followed by 24-hour stirring at 20°C in nitrogen gas stream, and a solid having a high viscosity was produced.

The obtained solid was dissolved in diethyl ether and then poured into hexane, followed by separation and then vacuum drying to obtain 10.3 g of a colorless transparent polymer.

According to ¹⁹F-NMR analysis, ¹H-NMR analysis and IR analysis, the obtained polymer was a fluorine-containing polymer consisting of the structural unit of the above-mentioned fluorine-containing allyl ether and having hydroxyl group at an end of its side chain. The number average molecular weight of the polymer measured by GPC analysis using THF as a solvent was 5,000 and its weight average molecular weight was 12,000.

Tg=-4°C, fluorine content (% by mass)=63, hydroxyl value (mgKOH/g)=98, refractive index=1.339.

### SYNTHESIS EXAMPLE 3

### (Synthesis of fluorine-containing allyl ether polymer (c) (PAEH-1/PAEE-1) having hydroxyl group in its side chain)

A 100 ml four-necked glass flask equipped with a stirrer and thermometer was charged with 9.6 g of perfluoro(1,1,9,9-tetrahydro-2,5-bistrifluoromethyl-3,6-dioxanonenol): 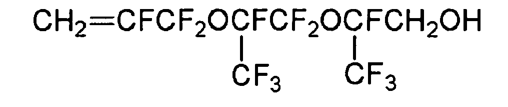 and 9.6 g of methyl 9H,9H-perfluoro-2,5-dimethyl-3,6-dioxa-8-nonenoate): 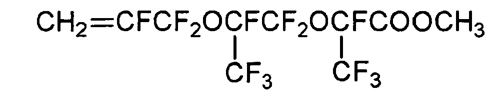 and stirring was sufficiently conducted. Then, thereto was added 2.0 g of 8.0 % by weight perfluorohexane solution of [H(CF₂CF₂)₃COO]₂-, and the inside of the flask was sufficiently replaced with nitrogen, followed by 20-hour stirring at 20°C in nitrogen gas stream, and a solid having a high viscosity was produced.

The obtained solid was dissolved in acetone and then poured into a solution comprising a mixture (HCFC225) of CF₃CF₂CHCl₂/CClF₂CF₂CHClF of 45/55 in mass percentage and n-hexane in a mass ratio of 1:1, followed by separation and then vacuum drying to obtain 15.5 g of a colorless transparent polymer.

According to ¹⁹F-NMR analysis, ¹H-NMR analysis and IR analysis, this polymer was a fluorine-containing copolymer comprising the structural units of the above-mentioned fluorine-containing allyl ether having hydroxyl group and the fluorine-containing allyl ether having a methyl ester structure. According to NMR, a ratio thereof was 42:58 (molar ratio).

The number average molecular weight of the polymer measured by GPC analysis using THF as a solvent was 7,200 and its weight average molecular weight was 11,000.

Tg=12°C, fluorine content (% by mass)=58, hydroxyl value (mgKOH/g)=62, refractive index=1.349.

### SYNTHESIS EXAMPLE 4

### (Synthesis of fluorine-containing allyl ether polymer (d) (PAEH-1/PAEHF-1) having hydroxyl group in its side chain)

A 100 ml four-necked glass flask equipped with a stirrer and thermometer was charged with 10.3 g of perfluoro(1,1,9,9-tetrahydro-2,5-bistrifluoromethyl-3,6-dioxanonenol): 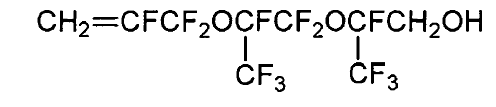 and 9.5 g of a fluorine-containing allyl ether having no functional group and represented by the following formula: 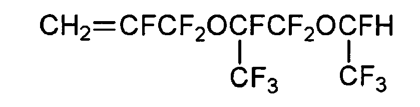 and stirring was sufficiently conducted. Then, thereto was added 9.8 g of 8.0 % by weight perfluorohexane solution of [H(CF₂CF₂)₃COO]₂-, and the inside of the flask was sufficiently replaced with nitrogen, followed by 5-hour stirring at 30°C in nitrogen gas stream, and a solid having a high viscosity was produced.

The obtained solid was dissolved in acetone and then poured into hexane, followed by separation and then vacuum drying to obtain 13.1 g of a colorless transparent polymer.

According to ¹⁹F-NMR analysis, ¹H-NMR analysis and IR analysis, this polymer was a fluorine-containing polymer consisting of the structural units of the above-mentioned fluorine-containing allyl ethers and having hydroxyl group and ketone group at an end of its side chain. According to NMR, a ratio thereof was 53:47 (molar ratio). The number average molecular weight of the polymer measured by GPC analysis using THF as a solvent was 22,000 and its weight average molecular weight was 33,000.

Tg=9°C, fluorine content (% by mass)=62, hydroxyl value (mgKOH/g)=68, refractive index=1.340.

### COMPARATIVE SYNTHESIS EXAMPLE

### (Synthesis of fluorine-containing acrylic polymer (e) (6FOn=1MA/HEMA) having hydroxyl group in its side chain)

A 100 ml four-necked glass flask equipped with a stirrer and thermometer was charged with 10.9 g of CH₂=C(CH₃)COOCH₂CF(CF₃)OCF₂CF₂CF₃ (6FOn=1-MA) and 4.2 g of 2-hydroxyethyl methacrylate (HEMA), and stirring was sufficiently conducted. Then, 4 mg of AIBN (azobis isobutyronitrile) was added thereto and the inside of the flask was sufficiently replaced with nitrogen, followed by 12-hour stirring at 70°C in nitrogen gas stream, and a solid was produced.

The obtained solid was dissolved in acetone and then poured into hexane, followed by separation and then vacuum drying to obtain 11.7 g of a colorless transparent polymer.

According to ¹⁹F-NMR analysis, ¹H-NMR analysis and IR analysis, a component ratio thereof was 78:22 (molar ratio). The number average molecular weight of the polymer measured by GPC analysis using tetrahydrofuran (THF) as a solvent was 34,000 and its weight average molecular weight was 50,000.

Tg=20°C, fluorine content (% by mass)=46, hydroxyl value (mgKOH/g)=94, refractive index=1.410.

### EXAMPLE 1

A composition (a1) was prepared according to the following formulation. Table 1 shows amounts of each component.

### Composition (a1)

| | |
|---|---|
| Polymer (a) | 50 parts by mass |
| Methyl methacrylate (MMA) | 40 parts by mass |
| Trimethylolpropane triacrylate (TMPA) | 10 parts by mass |
| 2-Hydroxy-2-methylpropiophenone | 1 part by mass |

Then, 8 parts by mass (corresponding to 0.5 equivalent based on hydroxyl groups) of Karenz AOI (hereinafter referred to as AOI) available from SHOWA DENKO K.K. was added as the unsaturated group-containing isocyanate (A-2) to 100 parts by mass of the composition (a1), and further, 0.01 part by mass of dibutyltindilaurate was added thereto, followed by 24-hour reaction at 40°C. The structural formula of AOI is represented by the formula (V).

CH₂=CHCOOCH₂CH₂NCO (V)

According to measurement by infrared-absorbing analysis of a reaction product, it was confirmed that absorption of -NCO derived from the isocyanate group of AOI had disappeared and absorption of NH assigned to urethane bond was observed, which indicates that the reaction had proceeded (Measurement was carried out at room temperature with a Fourier-transform infrared spectrophotometer 1760X available from Perkin Elmer Co., Ltd.).

Appearance of the liquid composition at 25°C before curing was evaluated with naked eyes. Criteria for the evaluation are as follows.
○: Composition is transparent and homogeneous, and transmission of 550 nm light is not less than 80 %.
△: White turbidity (gel) is partly found.
×: Composition is opaque and turbid in white.

The results of evaluation of viscosity of the liquid composition at 30°C before curing and appearance of the liquid composition are shown in Table 3.

Then, a fluorine-containing resin film NF-0100 (thickness 100 µm) for releasing of a coating film available from DAIKIN INDUSTRIES, LTD. was spread on a glass plate and the composition was coated thereon with an applicator to give a thickness of about 100 µm. Further, the coating was covered with a fluorine-containing resin film NF-0100 (thickness 100 µm) for releasing of the coating film available from DAIKIN INDUSTRIES, LTD. and a 1 mm thick slide glass was placed thereon. Then, after irradiation of ultraviolet ray from above at an intensity of 1,500 mJ/cm²U with a high pressure mercury lamp, fluorine-containing resin films for releasing were removed to give a cured film.

Fluorine content, refractive index (n), thermal decomposition temperature (Td) and light transmission (550 nm) (T) were measured.

Also, appearance was evaluated with naked eyes. Criteria for the evaluation are shown below.
○: Film is transparent and uniform.
△: White turbidity is partly found.
×: Film is opaque and turbid in white.

Also, solvent resistance was evaluated. Criteria for the evaluation are shown below.
○: No swelling is found with naked eyes.
△: Swelling is found with naked eyes.
×: Dissolved.

Further, heat resistance was evaluated. Criteria for the evaluation are shown below.
○: No change is found with naked eyes.
△: Change in color and turbidity are slightly found with naked eyes.
×: Change in color, turbidity and deformation are apparently found with naked eyes.

The results of the above-mentioned evaluation are shown in Table 3.

### EXAMPLE 2

Physical properties were measured in the same manner as in Example 1 except that 13 parts by mass (corresponding to 0.8 equivalent based on hydroxyl groups) of AOI was added to the composition (a1) and 24-hour reaction was carried out at 40°C. The amount of each component is shown in Table 1, and results of the evaluation are shown in Table 3.

### EXAMPLE 3

Physical properties were measured in the same manner as in Example 1 except that a composition (b) shown below was used instead of the composition (a1) and AOI was added in an amount of 6 parts by mass (corresponding to 0.5 equivalent based on hydroxyl groups). The amount of each component is shown in Table 1, and results of the evaluation are shown in Table 3.

### Composition (b)

| | |
|---|---|
| Polymer (b) | 50 parts by mass |
| MMA | 40 parts by mass |
| TMPA | 10 parts by mass |
| 2-Hydroxy-2-methylpropiophenone | 1 part by mass |

### EXAMPLE 4

Physical properties were measured in the same manner as in Example 1 except that a composition (c) shown below was used instead of the composition (a1) and AOI was added in an amount of 3 parts by mass (corresponding to 0.5 equivalent based on hydroxyl groups). The amount of each component is shown in Table 1, and results of the evaluation are shown in Table 3.

### Composition (c)

| | |
|---|---|
| Polymer (c) | 50 parts by mass |
| MMA | 40 parts by mass |
| TMPA | 10 parts by mass |
| 2-Hydroxy-2-methylpropiophenone | 1 part by mass |

### EXAMPLE 5

Physical properties were measured in the same manner as in Example 1 except that a composition (d) shown below was used instead of the composition (a1) and AOI was added in an amount of 4 parts by mass (corresponding to 0.5 equivalent based on hydroxyl groups). The amount of each component is shown in Table 1, and results of the evaluation are shown in Table 3.

### Composition (d)

| | |
|---|---|
| Polymer (d) | 50 parts by mass |
| MMA | 40 parts by mass |
| TMPA | 10 parts by mass |
| 2-Hydroxy-2-methylpropiophenone | 1 part by mass |

### EXAMPLE 6

To 100 parts by mass of the composition (a1) were added 9 parts by mass (corresponding to 0.5 equivalent based on hydroxyl groups) of Karenz MOI (hereinafter referred to as MOI) as an unsaturated group-containing isocyanate (A-2) and then 0.01 part by mass of dibutyltindilaurate, followed by 24-hour reaction at 40°C. The amount of each component is shown in Table 1. The structural formula of MOI is represented by the formula (VI).

H₂C=C(CH₃)COOCH₂CH₂NCO (VI)

According to measurement by infrared-absorbing analysis of a reaction product, it was confirmed that absorption of -NCO derived from the isocyanate group of MOI had disappeared and absorption of NH assigned to urethane bond was observed, which indicates that the reaction had proceeded (Measurement was carried out at room temperature with a Fourier-transform infrared spectrophotometer 1760X available from Perkin Elmer Co., Ltd.).

Physical properties of the composition before curing, and physical properties of a cured article were measured in the same manner as in Example 1. The results are shown in Table 3.

### EXAMPLE 7

To 100 parts by mass of the composition (a1) were added 12 parts by mass (corresponding to 0.5 equivalent based on hydroxyl groups) of Karenz BEI (hereinafter referred to as BEI) as an unsaturated group-containing isocyanate (A-2) and then 0.01 part by mass of dibutyltindilaurate, followed by 24-hour reaction at 40°C. The amount of each component is shown in Table 1. The structural formula of BEI is represented by the formula (VII).

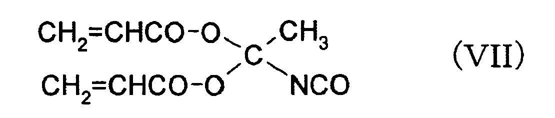

According to measurement by infrared-absorbing analysis of a reaction product, it was confirmed that absorption of -NCO derived from the isocyanate group of BEI had disappeared and absorption of NH assigned to urethane bond was observed, which indicates that the reaction had proceeded (Measurement was carried out at room temperature with a Fourier-transform infrared spectrophotometer 1760X available from Perkin Elmer Co., Ltd.).

Physical properties of the composition before curing, and physical properties of a cured article were measured in the same manner as in Example 1. The results are shown in Table 3.

### EXAMPLE 8

A composition (a2) was prepared according to the following formulation. Table 1 shows amounts of each component.

### Composition (a2)

| | |
|---|---|
| Polymer (a) | 30 parts by mass |
| MMA | 40 parts by mass |
| TMPA | 30 parts by mass |
| 2-Hydroxy-2-methylpropiophenone | 1 part by mass |

Then, 5 parts by mass (corresponding to 0.5 equivalent based on hydroxyl groups) of AOI was added as the unsaturated group-containing isocyanate (A-2) to 100 parts by mass of the composition (a2), and further, 0.01 part by mass of dibutyltindilaurate was added thereto, followed by 24-hour reaction at 40°C.

According to measurement by infrared-absorbing analysis of a reaction product, it was confirmed that absorption of -NCO derived from the isocyanate group of AOI had disappeared and absorption of NH assigned to urethane bond was observed, which indicates that the reaction had proceeded (Measurement was carried out at room temperature with a Fourier-transform infrared spectrophotometer 1760X available from Perkin Elmer Co., Ltd.).

Physical properties of the composition before curing, and physical properties of a cured article were measured in the same manner as in Example 1. The results are shown in Table 3.

### EXAMPLE 9

Physical properties were measured in the same manner as in Example 8 except that a composition (a3) shown below was used instead of the composition (a2) and AOI was added in an amount of 8 parts by mass (corresponding to 0.5 equivalent based on hydroxyl groups). The amount of each component is shown in Table 1, and results of the evaluation are shown in Table 3.

### Composition (a3)

| | |
|---|---|
| Polymer (a) | 50 parts by mass |
| CH₂=CCH₃-COOCH₂CF₃ (3FM) | 40 parts by mass |
| TMPA | 10 parts by mass |
| 2-Hydroxy-2-methylpropiophenone | 1 part by mass |

### COMPARATIVE EXAMPLE 1

Physical properties were measured in the same manner as in Example 9 except that the composition (a3) was used as it was. The amount of each component is shown in Table 2, and results of the evaluation are shown in Table 4.

### EXAMPLE 10

Physical properties were measured in the same manner as in Example 8 except that a composition (a4) shown below was used instead of the composition (a2) and AOI was added in an amount of 8 parts by mass (corresponding to 0.5 equivalent based on hydroxyl groups). The amount of each component is shown in Table 1, and results of the evaluation are shown in Table 3.

### Composition (a4)

| | |
|---|---|
| Polymer (a) | 50 parts by mass |
| CH₂=CCH₃-COOCH₂C₄F₈H (8FM) | 20 parts by mass |
| CH₂=CCH₃-COOCH₂CCH₃(CF₃)₂ (6FNPM) | 20 parts by mass |
| TMPA | 10 parts by mass |
| 2-Hydroxy-2-methylpropiophenone | 1 part by mass |

### COMPARATIVE EXAMPLE 2

Physical properties were measured in the same manner as in Example 10 except that the composition (a4) was used as it was. The amount of each component is shown in Table 2, and results of the evaluation are shown in Table 4.

### EXAMPLE 11

Physical properties were measured in the same manner as in Example 8 except that a composition (a5) shown below was used instead of the composition (a2) and AOI was added in an amount of 8 parts by mass (corresponding to 0.5 equivalent based on hydroxyl groups). The amount of each component is shown in Table 1, and results of the evaluation are shown in Table 3.

### Composition (a5)

| | |
|---|---|
| Polymer (a) | 50 parts by mass |
| 8FM | 20 parts by mass |
| 6FNPM | 20 parts by mass |
| 1,6-hexanediol diacrylate (16HX) | 10 parts by mass |
| 2-Hydroxy-2-methylpropiophenone | 1 part by mass |

### COMPARATIVE EXAMPLE 3

Physical properties were measured in the same manner as in Example 11 except that the composition (a5) was used as it was. The amount of each component is shown in Table 2, and results of the evaluation are shown in Table 4.

### EXAMPLE 12

Physical properties were measured in the same manner as in Example 8 except that a composition (a6) shown below was used instead of the composition (a2) and AOI was added in an amount of 3 parts by mass (corresponding to 0.5 equivalent based on hydroxyl groups).

The amount of each component is shown in Table 1, and results of the evaluation are shown in Table 3.

### Composition (a6)

| | |
|---|---|
| Polymer (a) | 20 parts by mass |
| 8FM | 40 parts by mass |
| 6FNPM | 30 parts by mass |
| 16HX | 10 parts by mass |
| 2-Hydroxy-2-methylpropiophenone | 1 part by mass |

### COMPARATIVE EXAMPLE 4

Physical properties were measured in the same manner as in Example 11 except that the composition (a6) was used as it was. The amount of each component is shown in Table 2, and results of the evaluation are shown in Table 4.

### EXAMPLE 13

Physical properties were measured in the same manner as in Example 8 except that a composition (a7) shown below was used instead of the composition (a2) and AOI was added in an amount of 8 parts by mass (corresponding to 0.5 equivalent based on hydroxyl groups). The amount of each component is shown in Table 1, and results of the evaluation are shown in Table 3.

### Composition (a7)

| | |
|---|---|
| Polymer (a) | 50 parts by mass |
| CH₂=CH-COOCH₂C₄F₈H (8FA) | 50 parts by mass |
| 2-Hydroxy-2-methylpropiophenone | 1 part by mass |

### COMPARATIVE EXAMPLE 5

Measuring of physical properties was tried in the same manner as in Example 11 except that the composition (a7) was used as it was, but a cured article could not be obtained at an amount of ultraviolet radiation of 1,500 mJ/cm²U. The irradiation was further continued and the total amount of radiation reached 10,000 mJ/cm²U. However, since there remained tackiness, physical properties were not measured. The amount of each component is shown in Table 2.

### COMPARATIVE EXAMPLE 6

A curable fluorine-containing polymer (PAEFA) having α-fluoroacryloyl group described in Experimental Example 1 of WO 02/18457 was synthesized. The amount of each component is shown in Table 2.

A solvent, i.e., diethyl ether was removed by the following steps.
1. Butyl acetate was distilled off at 40°C at 0.5 mmHg or less with a rotary evaporator.
2. Drying is carried out at 40°C at 0.5 mmHg or less for 24 hours with a vacuum desiccator.

In the vacuum drying process of the step 2, gelling of the sample occurred, and dissolution in an acrylic monomer such as MMA did not occur, and therefore, a solvent-free curable composition could not be prepared.

### COMPARATIVE EXAMPLE 7

After dissolving 50 parts by mass of the polymer (a) in 100 parts by mass of butyl acetate, 8 parts by mass (corresponding to 0.5 equivalent based on hydroxyl groups) of AOI was added thereto, followed by 24-hour reaction at 40°C. The amount of each component is shown in Table 2.

According to measurement by infrared-absorbing analysis of a reaction product, it was confirmed that absorption of -NCO derived from the isocyanate group of AOI had disappeared and absorption of NH assigned to urethane bond was observed, which indicates that the reaction had proceeded. Then, a reaction solvent, i.e., butyl acetate was removed by the following steps.
1. Butyl acetate was distilled off at 60°C at 0.5 mmHg or less with a rotary evaporator.
2. Drying is carried out at 60°C at 0.5 mmHg or less for 24 hours with a vacuum desiccator.

In the vacuum drying process of the step 2, gelling of the sample occurred, and dissolution in an acrylic monomer such as MMA did not occur, and therefore, a solvent-free curable composition could not be prepared.

### COMPARATIVE EXAMPLE 8

A composition (e) was prepared according to the following formulation. Table 2 shows amounts of each component, and results of evaluation are shown in Table 4.

### Composition (e)

| | |
|---|---|
| Polymer (e) | 30 parts by mass |
| MMA | 40 parts by mass |
| TMPA | 30 parts by mass |
| 2-Hydroxy-2-methylpropiophenone | 1 part by mass |

Then, 8 parts by mass (corresponding to 0.5 equivalent based on hydroxyl groups) of AOI was added as the unsaturated group-containing isocyanate (A-2) to 100 parts by mass of the composition (e), and further, 0.01 part by mass of dibutyltindilaurate was added thereto, followed by 24-hour reaction at 40°C.

As a result, the polymer (e) was not dissolved in the acrylic monomer, and a dispersion turbid in white was obtained. According to measurement by infrared-absorbing analysis of a reaction product, absorption of NH assigned to urethane bond was observed, but absorption of -NCO derived from the isocyanate group of AOI remained and as a result, the reaction was difficult to proceed (Measurement was carried out at room temperature with a Fourier-transform infrared spectrophotometer 1760X available from Perkin Elmer Co., Ltd.). Also, a cured article remained tacky in the case of an amount of ultraviolet radiation of 1,500 mJ/cm²U and turned white. The results are shown in Table 3.

### EXAMPLE 14

Physical properties were measured in the same manner as in Example 8 except that a composition (a8) shown below was used instead of the composition (a2) and AOI was added in an amount of 7 parts by mass (corresponding to 0.5 equivalent based on hydroxyl groups). The amount of each component is shown in Table 1, and results of the evaluation are shown in Table 3.

### Composition (a8)

| | |
|---|---|
| Polymer (a) | 42 parts by mass |
| MMA | 33 parts by mass |
| CH₂=OH-COOCH₂CF₃ (3FA) | 17 parts by mass |
| TMPA | 8 parts by mass |
| 2-Hydroxy-2-methylpropiophenone | 1 part by mass |

### EXAMPLE 15

Physical properties were measured using the composition (a8) in the same manner as in Example 14 except that 11 parts by mass (corresponding to 0.8 equivalent based on hydroxyl groups) of AOI was added. The amount of each component is shown in Table 1, and results of the evaluation are shown in Table 3.

### EXAMPLE 16

Physical properties were measured in the same manner as in Example 14 except that a composition (a9) shown below was used instead of the composition (a8) and AOI was added in an amount of 4 parts by mass (corresponding to 0.5 equivalent based on hydroxyl groups). The amount of each component is shown in Table 1, and results of the evaluation are shown in Table 3.

### Composition (a9)

| | |
|---|---|
| Polymer (a) | 25 parts by mass |
| MMA | 33 parts by mass |
| 3FA | 17 parts by mass |
| TMPA | 25 parts by mass |
| 2-Hydroxy-2-methylpropiophenone | 1 part by mass |

### EXAMPLE 17

Physical properties were measured in the same manner as in Example 14 except that a composition (a10) shown below was used instead of the composition (a8) and AOI was added in an amount of 7 parts by mass (corresponding to 0.5 equivalent based on hydroxyl groups). The amount of each component is shown in Table 1, and results of the evaluation are shown in Table 3.

### Composition (a10)

| | |
|---|---|
| Polymer (a) | 42 parts by mass |
| MMA | 33 parts by mass |
| 8FA | 17 parts by mass |
| TMPA | 8 parts by mass |
| 2-Hydroxy-2-methylpropiophenone | 1 part by mass |

### EXAMPLE 18

Physical properties were measured in the same manner as in Example 14 except that the composition (a10) was used in the same manner as in Example 17 and 11 parts by mass (corresponding to 0.8 equivalent based on hydroxyl groups) of AOI was added. The amount of each component is shown in Table 1, and results of the evaluation are shown in Table 3.

### EXAMPLE 19

Physical properties were measured in the same manner as in Example 14 except that a composition (a11) shown below was used instead of the composition (a8) and AOI was added in an amount of 4 parts by mass (corresponding to 0.5 equivalent based on hydroxyl groups). The amount of each component is shown in Table 1, and results of the evaluation are shown in Table 3.

### Composition (a11)

| | |
|---|---|
| Polymer (a) | 25 parts by mass |
| MMA | 33 parts by mass |
| 8FA | 17 parts by mass |
| TMPA | 25 parts by mass |
| 2-Hydroxy-2-methylpropiophenone | 1 part by mass |

### EXAMPLE 20

Physical properties were measured in the same manner as in Example 14 except that a composition (a12) shown below was used instead of the composition (a8) and AOI was added in an amount of 4 parts by mass (corresponding to 0.5 equivalent based on hydroxyl groups). The amount of each component is shown in Table 1, and results of the evaluation are shown in Table 3.

### Composition (a12)

| | |
|---|---|
| Polymer (a) | 25 parts by mass |
| MMA | 33 parts by mass |
| 3FA | 17 parts by mass |
| TMPA | 20 parts by mass |
| Dipentaerythritol hexaacrylate (DPEHA) | 5 parts by mass |
| 2-Hydroxy-2-methylpropiophenone | 1 part by mass |

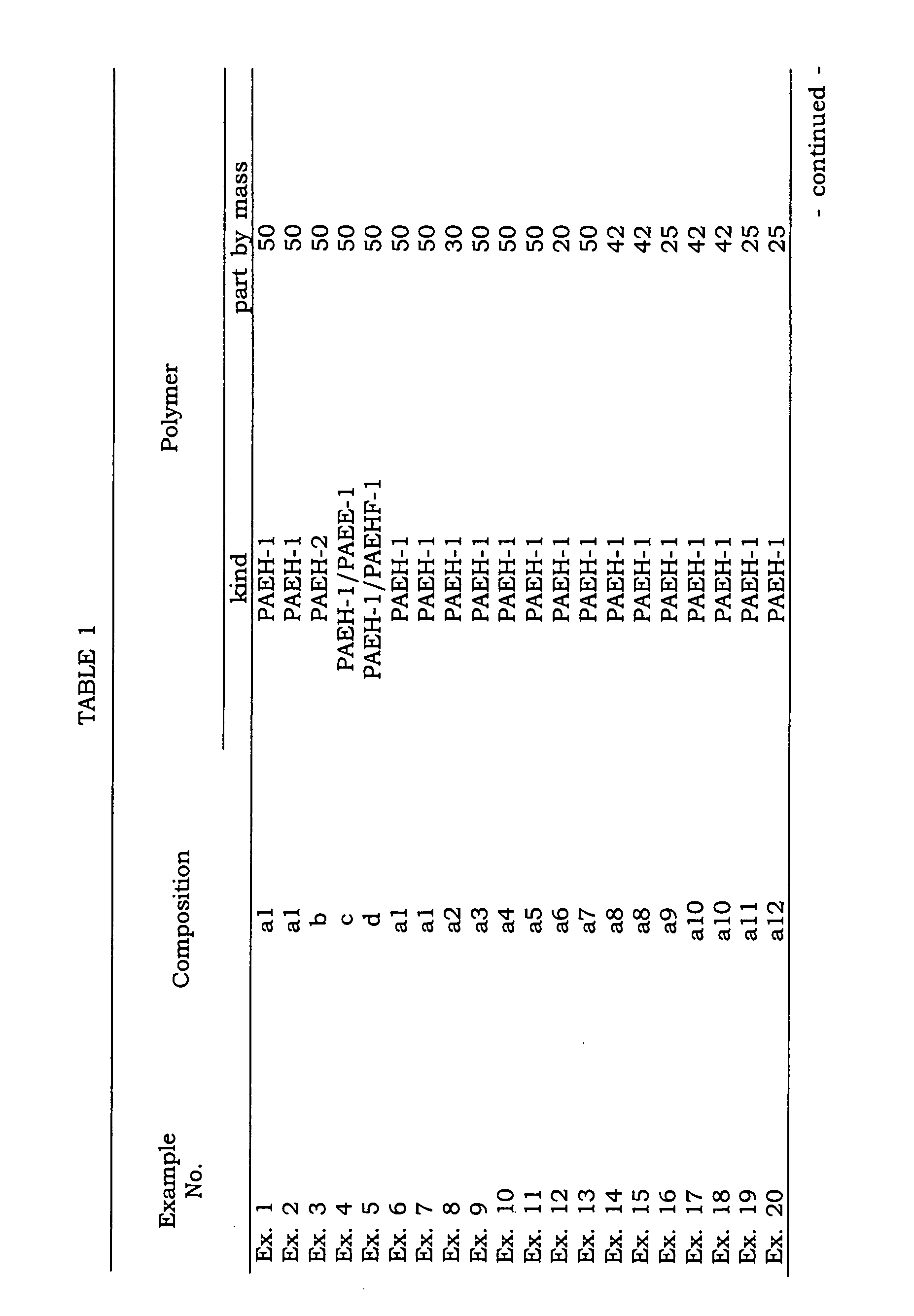

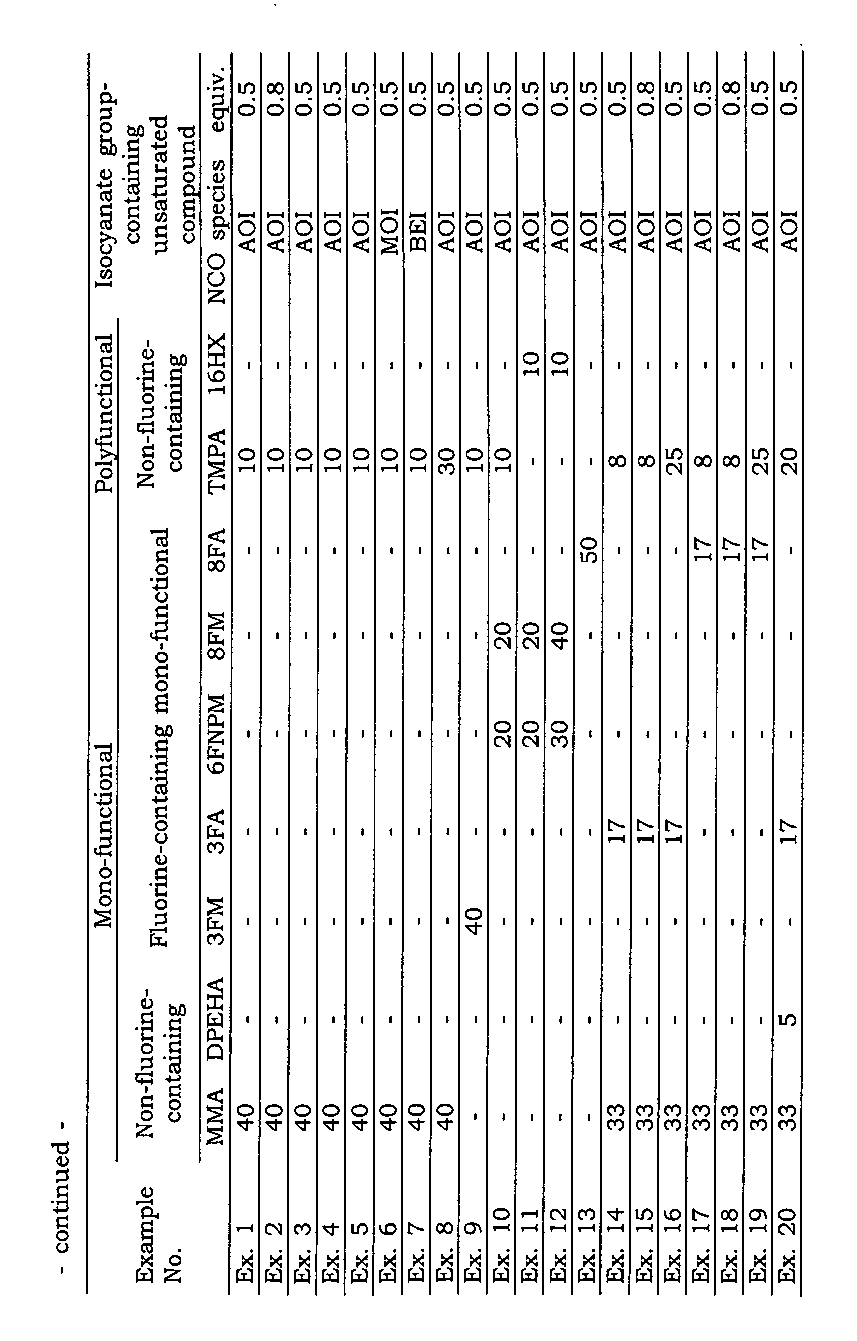

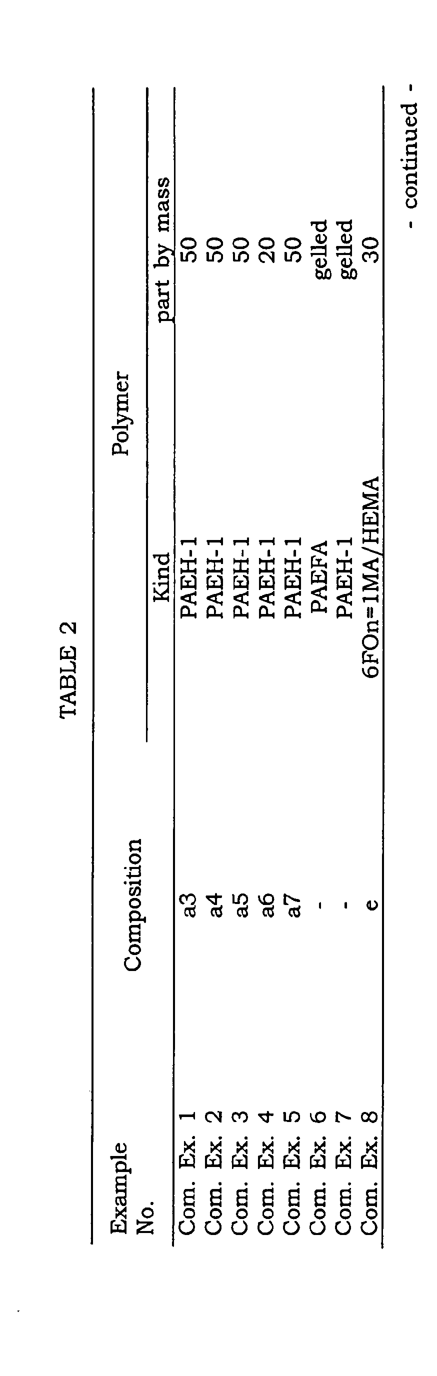

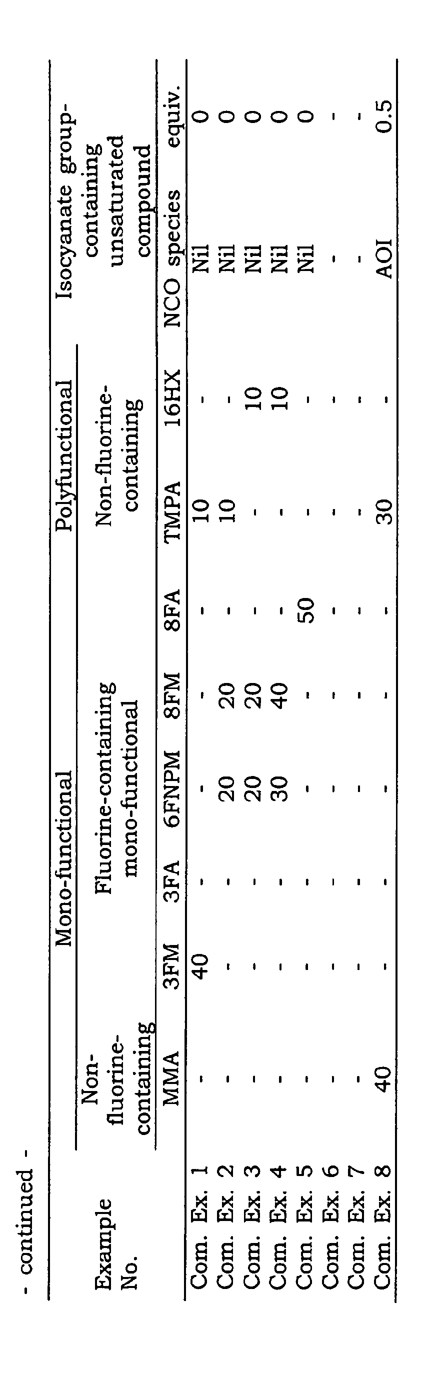

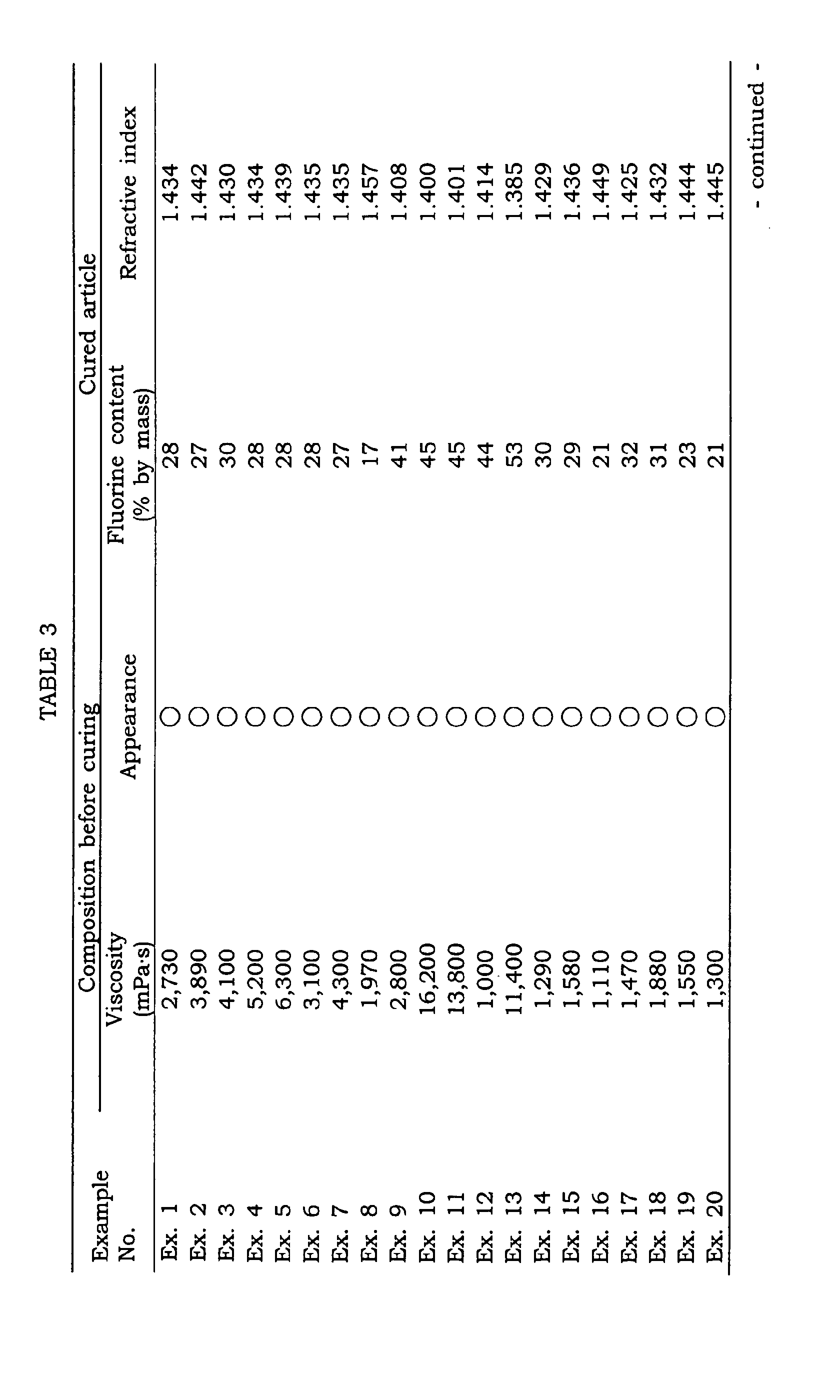

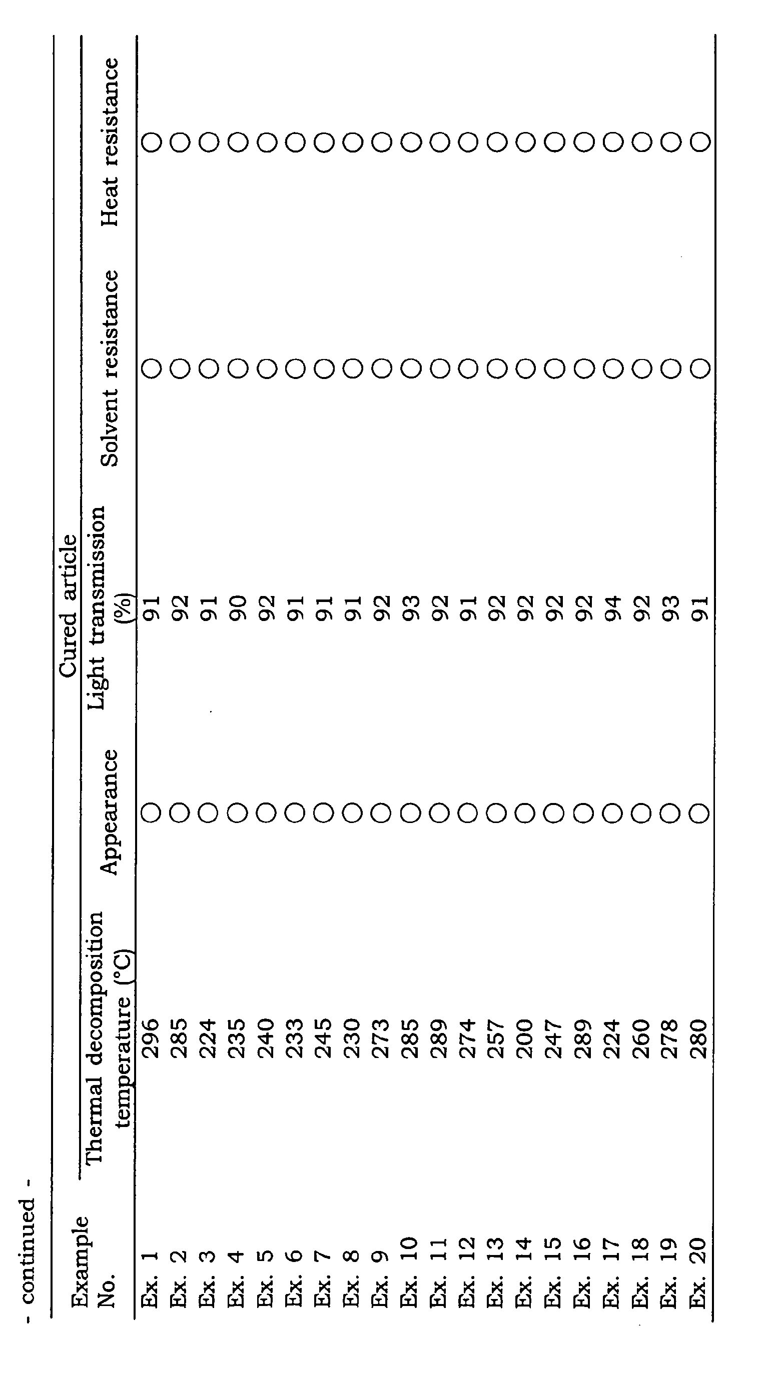

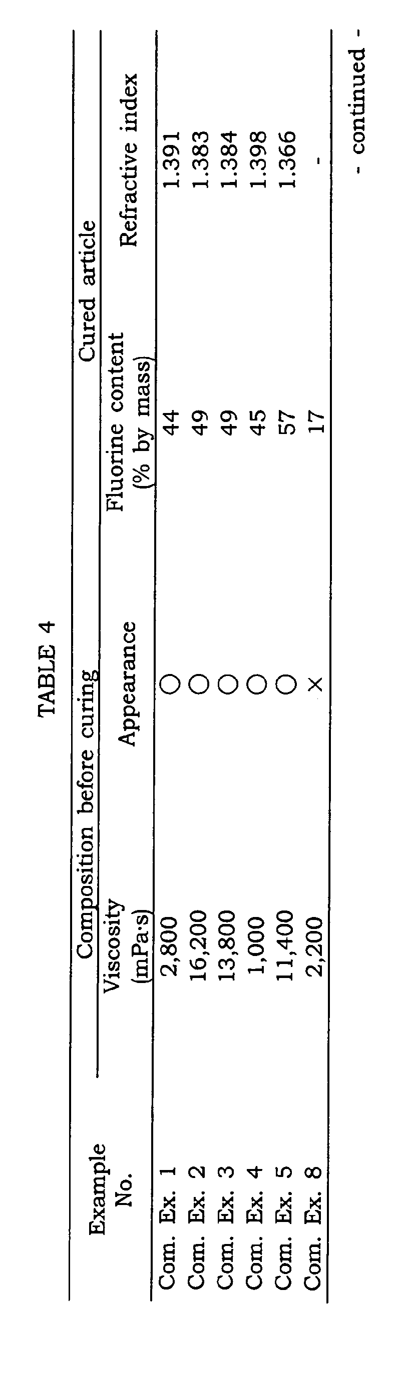

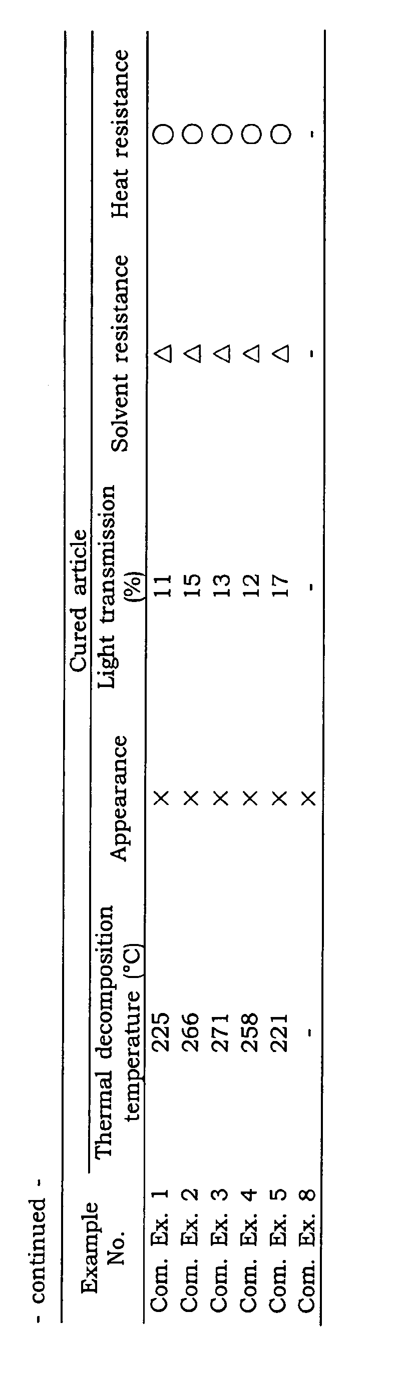

### INDUSTRIAL APPLICABILITY

The curable resin composition of the present invention has a specific viscosity since the reaction product of the fluorine-containing polymer having hydroxyl group and the isocyanate group-containing unsaturated compound is dissolved in the acrylic monomer, and therefore, it can be easily cured especially without being dissolved in an organic solvent and no step for removing a solvent from the curable resin composition is necessary.

Also, in preparing the curable resin composition of the present invention, hydroxyl group of the fluorine-containing polymer having hydroxyl group is allowed to react with isocyanate group of the isocyanate group-containing unsaturated compound to form urethane bond, and therefore, by-products such as a salt are not generated. For that reason, no step for removing by-products is necessary and this reaction can be carried out in the acrylic monomer, thus making the preparation process easy.

Further, since the curable resin composition of the present invention has high fluorine content, a refractive index of the obtained cured article can be made low.

## Claims

1. A curable resin composition, comprising (A) a reaction product of a fluorine-containing polymer (A-1) having hydroxyl group and comprising a radically polymerizable unsaturated monomer unit having fluorine atom and hydroxyl group and
an isocyanate group-containing unsaturated compound (A-2) having one isocyanate group and at least one radically polymerizable unsaturated group,
said reaction product is dissolved in (B) an acrylic monomer.

2. The curable resin composition of Claim 1, which has a viscosity at 30°C of 5 to 100,000 mPa·s.

3. The curable resin composition of Claim 1 or 2, wherein the fluorine-containing polymer (A-1) having hydroxyl group has a structural unit represented by the formula (I). 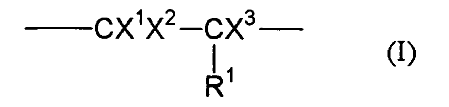 wherein X¹ and X² may be the same or different and each is fluorine atom or hydrogen atom; X³ is fluorine atom, hydrogen atom, chlorine atom, methyl group or trifluoromethyl group; R¹ is a chain or branched alkyl group, fluoroalkyl group or perfluoroalkyl group having 1 to 30 carbon atoms and at least one hydroxyl group and may have an ether bond, ester bond or urethane bond in its chain, and at least one fluorine atom is contained in any of X¹ to X³ and R¹.

4. The curable resin composition of any of Claims 1 to 3, wherein the fluorine-containing polymer (A-1) having hydroxyl group has a structural unit represented by the formula (II). 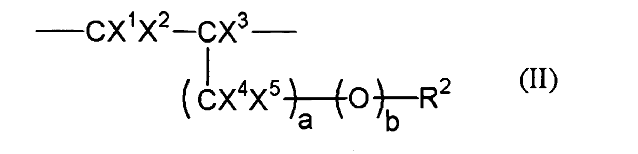 wherein X¹ and X² may be the same or different and each is fluorine atom or hydrogen atom; X³ is fluorine atom, hydrogen atom, chlorine atom, methyl group or trifluoromethyl group; X⁴ and X⁵ may be the same or different and each is hydrogen atom, fluorine atom, methyl group or trifluoromethyl group; a is 0 or an integer of 1 to 3; b is 0 or 1; R² is a chain or branched alkyl group, fluoroalkyl group or perfluoroalkyl group having 1 to 29 carbon atoms and at least one hydroxyl group and may have an ether bond, ester bond or urethane bond in its chain, and at least one fluorine atom is contained in any of X¹ to X⁵ and R².

5. The curable resin composition of any of Claims 1 to 4, wherein the fluorine-containing polymer (A-1) having hydroxyl group has a structural unit represented by the formula (III). 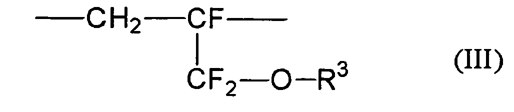 wherein R³ is a chain or branched alkyl group, fluoroalkyl group or perfluoroalkyl group having 1 to 29 carbon atoms and at least one hydroxyl group and may have an ether bond, ester bond or urethane bond in its chain.

6. The curable resin composition of any of Claims 1 to 5, wherein the acrylic monomer (B) is an acrylic monomer having one or more radically reactive group.

7. The curable resin composition of any of Claims 1 to 6, wherein the radically polymerizable unsaturated group in the isocyanate group-containing unsaturated compound (A-2) is a methacryl group, an acryl group, a 2-fluoroacryl group, a 2-chloroacryl group or two or more thereof.

8. A process for preparing a curable resin composition, comprising a step of dissolving a fluorine-containing polymer (A-1) having hydroxyl group and comprising a radically polymerizable unsaturated monomer unit having fluorine atom and hydroxyl group and an isocyanate group-containing unsaturated compound (A-2) having one isocyanate group and at least one radically polymerizable unsaturated group in an acrylic monomer (B), and a step of allowing the fluorine-containing polymer (A-1) having hydroxyl group to react with the isocyanate group-containing unsaturated compound (A-2) in the acrylic monomer (B).

9. The process for preparing a curable resin composition of Claim 8, wherein the fluorine-containing copolymer (A-1) having hydroxyl group is dissolved in the acrylic monomer (B) and subsequently the isocyanate group-containing unsaturated compound (A-2) is added thereto and dissolved.

10. The process for preparing a curable resin composition of Claim 8 or 9, wherein a ratio of the number of isocyanate groups in the isocyanate group-containing unsaturated compound (A-2) to the number of all hydroxyl groups in the fluorine-containing polymer (A-1) having hydroxyl group and the acrylic monomer (B) is 0.01:1 1 to 1:1.

11. The process for preparing a curable resin composition of any of Claims 8 to 10, wherein the fluorine-containing polymer (A-1) having hydroxyl group has a structural unit represented by the formula (I). 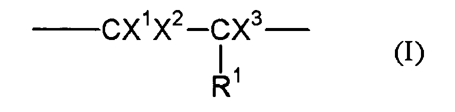 wherein X¹ and X² may be the same or different and each is fluorine atom or hydrogen atom; X³ is fluorine atom, hydrogen atom, chlorine atom, methyl group or trifluoromethyl group; R¹ is a chain or branched alkyl group, fluoroalkyl group or perfluoroalkyl group having 1 to 30 carbon atoms and at least one hydroxyl group and may have an ether bond, ester bond or urethane bond in its chain, and at least one fluorine atom is contained in any of X¹ to X³ and R¹.

12. The process for preparing a curable resin composition of any of Claims 8 to 11, wherein the fluorine-containing polymer (A-1) having hydroxyl group has a structural unit represented by the formula (II). 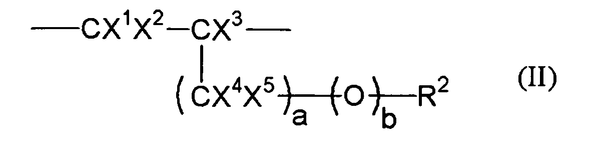 wherein X¹ and X² may be the same or different and each is fluorine atom or hydrogen atom; X³ is fluorine atom, hydrogen atom, chlorine atom, methyl group or trifluoromethyl group; X⁴ and X⁵ may be the same or different and each is hydrogen atom, fluorine atom, methyl group or trifluoromethyl group; a is 0 or an integer of 1 to 3; b is 0 or 1; R² is a chain or branched alkyl group, fluoroalkyl group or perfluoroalkyl group having 1 to 29 carbon atoms and at least one hydroxyl group and may have an ether bond, ester bond or urethane bond in its chain, and at least one fluorine atom is contained in any of X¹ to X⁵ and R².

13. The process for preparing a curable resin composition of any of Claims 8 to 12, wherein the fluorine-containing polymer (A-1) having hydroxyl group has a structural unit represented by the formula (III). 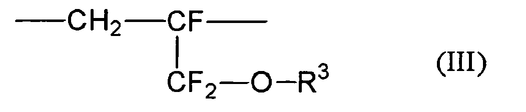 wherein R³ is a chain or branched alkyl group, fluoroalkyl group or perfluoroalkyl group having 1 to 29 carbon atoms and at least one hydroxyl group and may have an ether bond, ester bond or urethane bond in its chain.
